# EUROPÄISCHE PATENTSCHRIFT

(11) **EP 3 848 633 B1**
(45) Veröffentlichungstag und Bekanntmachung des Hinweises auf die Patenterteilung: **16.03.2022**
(21) Anmeldenummer: 20151210.0
(22) Anmeldetag: 10.01.2020
(51) Int. Cl.: F23N 5/24

(54) **SCHALTANORDNUNG MIT SCHUTZ VOR INTERNEN FEHLERN**
CIRCUIT WITH PROTECTION AGAINST INTERNAL FAULTS
CIRCUIT AVEC PROTECTION CONTRE LES ERREURS INTERNES

(43) Veröffentlichungstag der Anmeldung: 14.07.2021
(73) Patentinhaber: Siemens Aktiengesellschaft, 80333 München (DE)
(72) Erfinder: Ball, Tharsice, 67240 Schirrhein (FR); Lang, Erik, 76275 Ettlingen (DE)
(74) Vertreter: Maier, Daniel Oliver

(56) Entgegenhaltungen:
- EP-A1- 0 614 049
- EP-A2- 2 295 863
- WO-A1-95/16944
- DE-A1- 19 860 399
- US-A1- 2016 282 818

## Beschreibung

Die vorliegende Offenbarung behandelt den Schutz vor internen Fehlern in einem Feuerungsautomaten. Ein Feuerungsautomat gewährleistet eine möglichst vollständige und kontrollierte Verbrennung an Gas- und/oder Ölbrennern. Die vorliegende Offenbarung betrifft insbesondere den Schutz vor internen Fehlern aufgrund fehlerhafter Relais.

Bei Schaltungen für Feuerungsautomaten steht deren Sicherheit im Vordergrund. Sicherheitsgerichtete Steuerungen sind ferner aus den Bereichen der Automatisierungstechnik, der Medizintechnik und der Fahrzeugtechnik bekannt.

Im Stand der Technik ist bekannt, dass in Systemen für sicherheitskritische Aufgaben Massnahmen zum Schutz vor Fehlfunktionen getroffen werden. Dazu zählt beispielsweise die Überwachung von Funktionsblöcken einer Sicherheitseinrichtung durch Testsignale. Weiterhin bekannt ist die mehrkanalige Ausführung einer Sicherheitsarchitektur mit Ergebnisvergleich.

Anhand dieser Massnahmen sollen zufällig auftretende (und optional auch systematisch auftretende) Fehler erkannt werden. Anhand einer Überwachungseinheit ist ein sicherer Zustand einer (Brenner-)Anlage oder eines Prozesses zu erreichen.

Die Patentanmeldeschrift EP 0614049 A1 offenbart eine Schaltanordnung, umfassend eine erste und eine zweite Recheneinheit P1, P2, jeweils umfassend einen ersten Eingang und einen ersten Schalter Sch2, wobei die Recheneinheiten untereinander kommunikativ verbunden sind (Leitung 6).

Eine Patentanmeldung EP2295863A2 wurde eingereicht am 6. August 2010. Die Anmeldung wurde veröffentlicht am 16. März 2011. EP2295863A2 behandelt ein Verbrennungssystem und einen Gasfeuerungsautomaten. EP2295863A2 behandelt weiterhin eine Vorrichtung und ein Verfahren zur Unterbrechung einer Brennstoffzufuhr. EP2295863A2 nimmt eine Priorität vom 6. August 2009 in Anspruch.

EP2295863A2 lehrt eine Vorrichtung 1 für einen Gasfeuerautomaten mit drei Abschaltwegen 2, 3 und 5. Der erste Abschaltweg 2 wirkt auf einen Schalter 11. Der zweite Abschaltweg 3 wirkt auf zwei parallele Schalter 16. Der dritte Abschaltweg 5 wirkt auf einen weiteren Schalter 19. Der Schalter 11, die parallelen Schalter 16 und der weitere Schalter 19 sind in Serie geschaltet.

Der erste Abschaltweg 2 basiert auf einem Microcontroller 17. Ein weiterer Microcontroller 6 ist für den dritten Abschaltweg 5 vorgesehen. Der zweite Abschaltweg 3 weist einen Logikbaustein 10 auf. Der erste und der zweite Abschaltweg 2, 3 verfügen ferner über einen Stromausfallschutz 7.

Ein weiteres Patent US10209681B2 ist erteilt am 19. Februar 2019. US10209681B2 nimmt eine Priorität vom 23. März 2015 in Anspruch. Eine zugehörige Anmeldung US2016/0282818A1 wurde eingereicht am 21. März 2016. Die Anmeldung US2016/0282818A1 wurde am 29. September 2016 veröffentlicht. US10209681B2 behandelt eine Sicherheitsarchitektur für fehlersichere Systeme.

Die Sicherheitseinrichtung aus US10209681B2 umfasst eine Überwachungseinheit 30 sowie einen Prüfblock 34. Der Prüfblock 34 ist mit einer Ausgangsstufe 38 verbunden und überwacht Ausgangssignale der Überwachungseinheit 30. Aus den Ausgabesignalen der Überwachungseinheit 30 erzeugt der Prüfblock 34 Freigabesignale.

In der Ausgangsstufe 38 verknüpft ein Kontaktglied 41 ein Ausgabesignal der Überwachungseinheit 30 mit einem Freigabesignal des Prüfblockes 34. In Abhängigkeit vom Ergebnis der Verknüpfung durch das Kontaktglied 41 stellt die Ausgangsstufe 38 eine Abschaltfunktion bereit. US10209681B2 lehrt ferner ein Rückkopplungssignal 39 von der Ausgangsstufe 38 an die Überwachungseinheit 30.

Die vorliegende Offenbarung der Erfindung lehrt eine Schaltung für einen Feuerungsautomaten, welche in der Lage ist, fehlerhafte Microprozessoren und/oder fehlerhafte Microcontroller zu erkennen. Vorteilhaft ist der Feuerungsautomat auch in der Lage, fehlerhafte Steuerschaltkreise für Relais zu erkennen. Die Schaltung gemäss der vorliegenden Offenbarung bietet weiterhin Vorteile im Hinblick auf fehlerhafte Relais.

Kurzfassung der Erfindung Die vorliegende Offenbarung der Erfindung lehrt eine Schaltanordnung mit einem Schalter, insbesondere mit einem Relais. Der Schalter ist in Reihe geschaltet mit einem Verbraucher wie beispielsweise einem Ventil. Aufgabe der Schaltanordnung ist es, einen Ausfall des Schalters etwa durch Verschweissen von Relaiskontakten unter Vermeidung eines Ausfalls des gesamten Feuerungsautomaten zu behandeln. Dazu werden vor Inbetriebnahme eine grundlegende Funktionen des Schalters und/oder der beteiligten Recheneinheiten getestet.

So wird in einem ersten Schritt ein als Öffner ausgelegter Schalter geöffnet. Anschliessend wird über einen Positionsrückmelder von zwei Recheneinheiten ein Signal ausgelesen. Es wird eine Fehlermeldung ausgegeben, falls die beiden Recheneinheiten unterschiedliche Signale aus dem Positionsrückmelder auslesen. Dabei sind die Recheneinheiten untereinander kommunikativ gekoppelt, um einen Abgleich der Ergebnisse zwischen den Recheneinheiten zu ermöglichen.

Es ist ein verwandtes Ziel der vorliegenden Erfindung, weitere Relais zu testen. Vorzugsweise wird dabei ein als Schliesser ausgelegtes Relais nur dann geschlossen, wenn zwei Recheneinheiten möglichst unabhängig voneinander ein entsprechendes Signal ausgeben.

Es ist ferner ein Ziel der vorliegenden Erfindung, einen Stromausfallschutz bereitzustellen. Vorteilhaft wird der Stromausfallschutz von einer einstellbaren Versorgung so bereitgestellt, dass bei nicht funktionierendem Stromausfallschutz die vorgenannten Schliesser nicht betätigt werden können.

Es ist ein verwandtes Ziel der vorliegenden Erfindung, Mechanismen zum Stromausfallschutz, welche in den Recheneinheiten enthalten sind, optimal zu nutzen. Insbesondere geht es um solche Mechanismen, die durch Programmierung an- und abgeschaltet werden können.

Es ist ausserdem ein Ziel der vorliegenden Erfindung, vorhandene Eingänge von Recheneinheiten möglichst effizient zu nutzen. Dazu werden nach Möglichkeit Signale mehrerer Positionsrückmelder an ein und denselben Eingang geleitet.

Es ist darüber hinaus ein Ziel der vorliegenden Erfindung, einen Schutz vor internen Fehlern aus möglichst vielen unabhängigen Signalen herzuleiten. Insbesondere kann der Schutz vor internen Fehler auf mehreren unabhängigen Signalen von Positionsrückmeldern beruhen.

Es ist ferner ein Ziel der vorliegenden Erfindung, möglichst verlässliche Abschaltfunktionen bereitzustellen. Dazu sind mehrere Schalter zu koppeln, insbesondere mechanisch zu koppeln. So wird erreicht, dass beim Ausfall eines Schalters ein weiterer, gekoppelter Schalter die Abschaltfunktion übernimmt.

Es ist ein weiteres Ziel der vorliegenden Erfindung, eine Schaltung zur Erkennung defekter Relais in die Schaltanordnung zu integrieren.

Kurze Beschreibung der Figuren Verschiedene Details werden dem Fachmann anhand der folgenden detaillierten Beschreibung der Erfindung zugänglich. Die einzelnen Ausführungsformen sind dabei nicht einschränkend. Die Zeichnungen, welche der Beschreibung beigefügt sind, lassen sich wie folgt beschreiben:
FIG 1 veranschaulicht eine Schaltung für einen Feuerungsautomaten.
FIG 2 zeigt wie FIG 1 eine Schaltung für einen Feuerungsautomaten, wobei zusätzlich eine einstellbare Strom- und/oder Spannungsversorgung in die Schaltung einbezogen ist.
FIG 3 zeigt eine Schaltung für einen Feuerungsautomaten mit mechanisch gekoppelten Relais.
FIG 4 zeigt eine Schaltung zur Prüfung der Integrität eines Relais.
FIG 5 zeigt eine weitere Schaltung zur Prüfung der Integrität eines Relais.

### Detaillierte Beschreibung

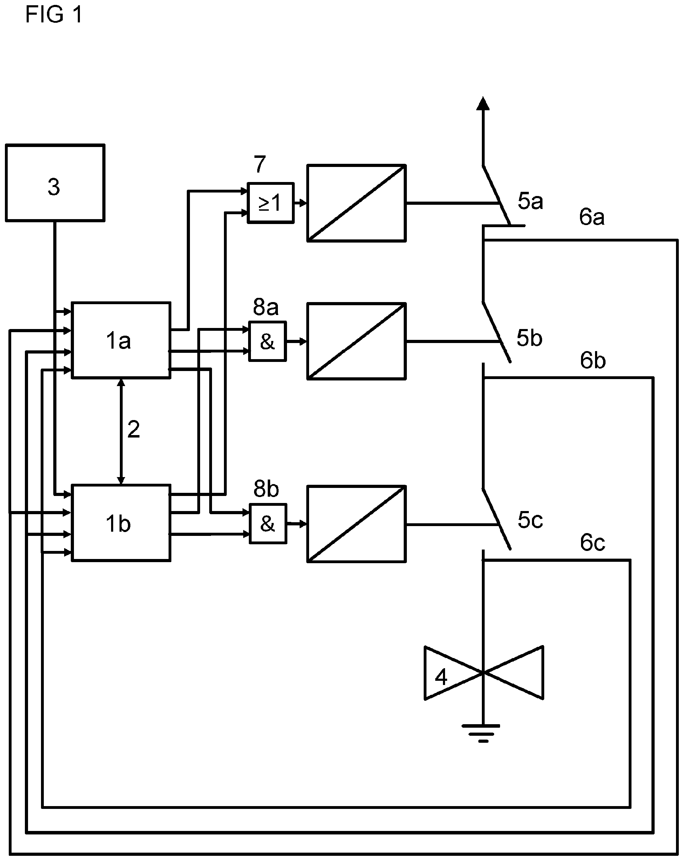

FIG 1 veranschaulicht eine Schaltung für einen Feuerungsautomaten. Die Schaltung aus FIG 1 umfasst mindestens zwei Recheneinheiten 1a, 1b. Die Recheneinheit 1a umfasst vorzugsweise einen Microcontroller und/oder einen Microprozessor. Die Recheneinheit 1b umfasst vorzugsweise ebenfalls einen Microcontroller und/oder einen Microprozessor. In einer Ausführungsform umfassen beide Recheneinheiten 1a, 1b jeweils einen Microcontroller. In einer weiteren Ausführungsform umfassen beide Recheneinheiten 1a, 1b jeweils einen Microprozessor.

Es ist weiterhin vorgesehen, dass die Recheneinheit 1a eine sogenannte Brownout-Detektion umfasst. Die Brownout-Detektion ist vorzugsweise aktivierbar, insbesondere durch Programmierung. Die Brownout-Detektion ist ausgebildet, im Betrieb der Recheneinheit 1a die Spannungsversorgung der Recheneinheit 1a zu überwachen. Im Falle einer zu geringen Spannungsversorgung ist die Brownout-Detektion ausgebildet, einen entsprechenden Registerwert der Recheneinheit 1a zu setzen. Vorzugsweise sind die Brownout-Detektion der Recheneinheit 1a und ein Microcontroller und/oder Microprozessor der Recheneinheit 1a auf dem gleichen Ein-Chip-System angeordnet.

Es ist ferner vorgesehen, dass die Recheneinheit 1b eine sogenannte Brownout-Detektion umfasst. Die Brownout-Detektion ist vorzugsweise aktivierbar, insbesondere durch Programmierung. Die Brownout-Detektion aktiviert sich im Falle einer zu geringen Versorgungs-Spannung. Die Brownout-Detektion ist ausgebildet, im Betrieb der Recheneinheit 1b die Spannungsversorgung der Recheneinheit 1b zu überwachen. Im Falle einer zu geringen Spannungsversorgung ist die Brownout-Detektion ausgebildet, einen entsprechenden Registerwert der Recheneinheit 1b zu setzen. Vorzugsweise sind die Brownout-Detektion der Recheneinheit 1b und ein Microcontroller und/oder Microprozessor der Recheneinheit 1b auf dem gleichen Ein-Chip-System angeordnet.

In einer Ausführungsform umfassen beide Recheneinheiten 1a, 1b je eine Brownout-Detektion.

Ein Kommunikationsbus 2 wie beispielsweise ein bidirektionaler Kommunikationsbus koppelt die Recheneinheiten 1a, 1b. Ein bidirektionaler Kommunikationsbus 2 ermöglicht Kommunikation sowohl von der Recheneinheit 1a in Richtung der Recheneinheit 1b als auch umgekehrt. Der Kommunikationsbus 2 ist vorzugsweise ein digitaler Kommunikationsbus. Die Recheneinheiten 1a, 1b nutzen vorteilhaft ein vorgegebenes Kommunikationsbusprotokoll wie beispielsweise ein digitales Kommunikationsbusprotokoll. Es ist vorgesehen, dass der Kommunikationsbus 2 eine drahtgebundene Verbindung zwischen den Recheneinheiten 1a, 1b umfasst.

Eine Strom- und/oder Spannungshauptversorgung der Schaltung 3 versorgt die Recheneinheiten 1a, 1b mit elektrischer Energie. Die Strom- und/oder Spannungshauptversorgung der Schaltung 3 stellt vorzugsweise eine Spannung von 1.2 Volt und/oder 2 Volt und/oder 3 Volt und/oder 3.3 Volt und/oder 5 Volt und/oder 6 Volt zur Versorgung der Recheneinheiten 1a, 1b bereit. Vorteilhaft werden beide Recheneinheiten 1a, 1b mit derselben Spannung, insbesondere mit derselben Gleichspannung, versorgt.

In einer speziellen Ausführungsform umfasst die Strom- und/oder Spannungshauptversorgung der Schaltung 3 getrennte Ausgänge für jede der Recheneinheiten 1a, 1b. Ein erster Ausgang ist mit der Recheneinheit 1a galvanisch verbunden. Der erste Ausgang kann insbesondere eine Sicherung gegenüber Kurzschlüssen umfassen. Mit anderen Worten, wenn ein Kurzschluss in der Recheneinheit 1a oder in einer galvanischen Verbindung zur Recheneinheit 1a auftritt, bleiben andere Ausgänge weitgehend stabil. Ein zweiter Ausgang ist mit der Recheneinheit 1b galvanisch verbunden. Der zweite Ausgang kann insbesondere eine Sicherung gegenüber Kurzschlüssen umfassen. Mit anderen Worten, wenn ein Kurzschluss in der Recheneinheit 1b oder in einer galvanischen Verbindung zur Recheneinheit 1b auftritt, bleiben andere Ausgänge weitgehend stabil.

Die Schaltung aus FIG 1 steuert und/oder regelt ein Ventil 4 wie beispielsweise ein Sicherheitsventil. Das Ventil 4 kann insbesondere ein Ventil 4 eines Gasbrenners und/oder eines Ölbrenners sein. Zum Steuern und/oder Regeln des Ventils 4 sind mehrere Schalter 5a - 5c mit dem Ventil 4 in Reihe geschaltet. Die Schalter 5a - 5c umfassen vorzugsweise Relais. Insbesondere können sämtliche Schalter 5a - 5c der Schaltung aus FIG 1 Relais umfassen. In einer weiteren Ausführungsform umfasst mindestens ein Schalter 5a - 5c einen Transistor und/oder einen Feldeffekt-Transistor und/oder einen Bipolartransistor mit isolierter Gate-Elektrode. Insbesondere kann jeder der Schalter 5a - 5c einen Transistor und/oder einen Feldeffekt-Transistor und/oder einen Bipolartransistor umfassen. Ferner ist vorgesehen, dass mindestens ein Schalter 5a - 5c einen Röhrenverstärker und/oder einen Vakuumschalter umfasst. Röhrenverstärker können beispielsweise in solchen Schaltungen zum Einsatz kommen, in denen Robustheit im Vordergrund steht.

Dem Schalter 5a ist ein Oder-Glied 7 vorgeschaltet. Das Oder-Glied 7 ist verbunden mit je einem Ausgang der Recheneinheiten 1a, 1b. Das Oder-Glied 7 kann insbesondere galvanisch mit je einem Ausgang der Recheneinheiten 1a, 1b verbunden sein.

Der Schalter 5a umfasst vorzugsweise einen Öffner. Mit anderen Worten, der Schalter 5a unterbricht die Versorgung des Ventils 4 mit elektrischem Strom, sobald er betätigt wird. Das Oder-Glied 7 und der Schalter 5a unterbrechen also die Versorgung des Ventils 4, sobald mindestens eine der Recheneinheiten 1a, 1b ein entsprechendes Signal an das Oder-Glied 7 sendet.

Dem Schalter 5b ist ein Und-Glied 8a vorgeschaltet. Das Und-Glied 8a ist verbunden mit je einem Ausgang der Recheneinheiten 1a, 1b. Das Und-Glied 8a kann insbesondere galvanisch mit je einem Ausgang der Recheneinheiten 1a, 1b verbunden sein.

Der Schalter 5b umfasst vorzugsweise einen Schliesser. Mit anderen Worten, der Schalter 5b ermöglicht einen elektrischen Stromfluss, sobald er betätigt wird. Das Und-Glied 8a und der Schalter 5b setzen also einen der Schalter in Richtung des Ventils 4 leitend, wenn beide Recheneinheiten 1a, 1b ein entsprechendes Signal an das Und-Glied 8a senden. Andernfalls leitet der Schalter 5b keinen elektrischen Strom.

Dem Schalter 5c ist ebenfalls ein Und-Glied 8b vorgeschaltet. Das Und-Glied 8b ist verbunden mit je einem Ausgang der Recheneinheiten 1a, 1b. Das Und-Glied 8b kann insbesondere galvanisch mit je einem Ausgang der Recheneinheiten 1a, 1b verbunden sein.

Der Schalter 5c umfasst vorzugsweise einen Schliesser. Mit anderen Worten, der Schalter 5c ermöglicht einen elektrischen Stromfluss, sobald er betätigt wird. Das Und-Glied 8b und der Schalter 5c setzen also einen der Schalter in Richtung des Ventils 4 leitend, wenn beide Recheneinheiten 1a, 1b ein entsprechendes Signal an das Und-Glied 8b senden. Andernfalls leitet der Schalter 5c keinen elektrischen Strom.

Der Schalter 5a ist gekoppelt mit einem Positionsrückmelder 6a. Idealer Weise ist der Positionsrückmelder 6a Teil des Schalters 5a. Der Positionsrückmelder 6a ist verbunden mit einem Eingang der Recheneinheit 1a. Die Recheneinheit 1a umfasst vorzugsweise einen digitalen Eingang, welcher mit dem Positionsrückmelder 6a verbunden ist. In einer weiteren Ausführungsform umfasst die Recheneinheit 1a einen analogen Eingang, der mit dem Positionsrückmelder 6a verbunden ist. In einer speziellen Ausführungsform umfasst die Recheneinheit 1a einen Delta-Sigma Kreis zur Verarbeitung eines oder mehrerer Signale des Positionsrückmelders 6a. Der Positionsrückmelder 6a ist auch verbunden mit einem Eingang der Recheneinheit 1b. Die Recheneinheit 1b umfasst vorzugsweise einen digitalen Eingang, welcher mit dem Positionsrückmelder 6a verbunden ist. In einer weiteren Ausführungsform umfasst die Recheneinheit 1b einen analogen Eingang, der mit dem Positionsrückmelder 6a verbunden ist. In einer speziellen Ausführungsform umfasst die Recheneinheit 1b einen Delta-Sigma Kreis zur Verarbeitung eines oder mehrerer Signale des Positionsrückmelders 6a.

Der Schalter 5b ist gekoppelt mit einem Positionsrückmelder 6b. Idealer Weise ist der Positionsrückmelder 6b Teil des Schalters 5b. Der Positionsrückmelder 6b ist verbunden mit einem Eingang der Recheneinheit 1a. Die Recheneinheit 1a umfasst vorzugsweise einen digitalen Eingang, welcher mit dem Positionsrückmelder 6b verbunden ist. In einer weiteren Ausführungsform umfasst die Recheneinheit 1a einen analogen Eingang, der mit dem Positionsrückmelder 6b verbunden ist. In einer speziellen Ausführungsform umfasst die Recheneinheit 1a einen Delta-Sigma Kreis zur Verarbeitung eines oder mehrerer Signale des Positionsrückmelders 6b. Der Positionsrückmelder 6b ist auch verbunden mit einem Eingang der Recheneinheit 1b. Die Recheneinheit 1b umfasst vorzugsweise einen digitalen Eingang, welcher mit dem Positionsrückmelder 6b verbunden ist. In einer weiteren Ausführungsform umfasst die Recheneinheit 1b einen analogen Eingang, der mit dem Positionsrückmelder 6b verbunden ist. In einer speziellen Ausführungsform umfasst die Recheneinheit 1b einen Delta-Sigma Kreis zur Verarbeitung eines oder mehrerer Signale des Positionsrückmelders 6b.

Ferner ist der Schalter 5c gekoppelt mit einem Positionsrückmelder 6c. Idealer Weise ist der Positionsrückmelder 6c Teil des Schalters 5c. Der Positionsrückmelder 6c ist verbunden mit einem Eingang der Recheneinheit 1a. Die Recheneinheit 1a umfasst vorzugsweise einen digitalen Eingang, welcher mit dem Positionsrückmelder 6c verbunden ist. In einer weiteren Ausführungsform umfasst die Recheneinheit 1a einen analogen Eingang, der mit dem Positionsrückmelder 6c verbunden ist. In einer speziellen Ausführungsform umfasst die Recheneinheit 1a einen Delta-Sigma Kreis zur Verarbeitung eines oder mehrerer Signale des Positionsrückmelders 6c. Der Positionsrückmelder 6c ist auch verbunden mit einem Eingang der Recheneinheit 1b. Die Recheneinheit 1b umfasst vorzugsweise einen digitalen Eingang, welcher mit dem Positionsrückmelder 6c verbunden ist. In einer weiteren Ausführungsform umfasst die Recheneinheit 1b einen analogen Eingang, der mit dem Positionsrückmelder 6c verbunden ist. In einer speziellen Ausführungsform umfasst die Recheneinheit 1b einen Delta-Sigma Kreis zur Verarbeitung eines oder mehrerer Signale des Positionsrückmelders 6c.

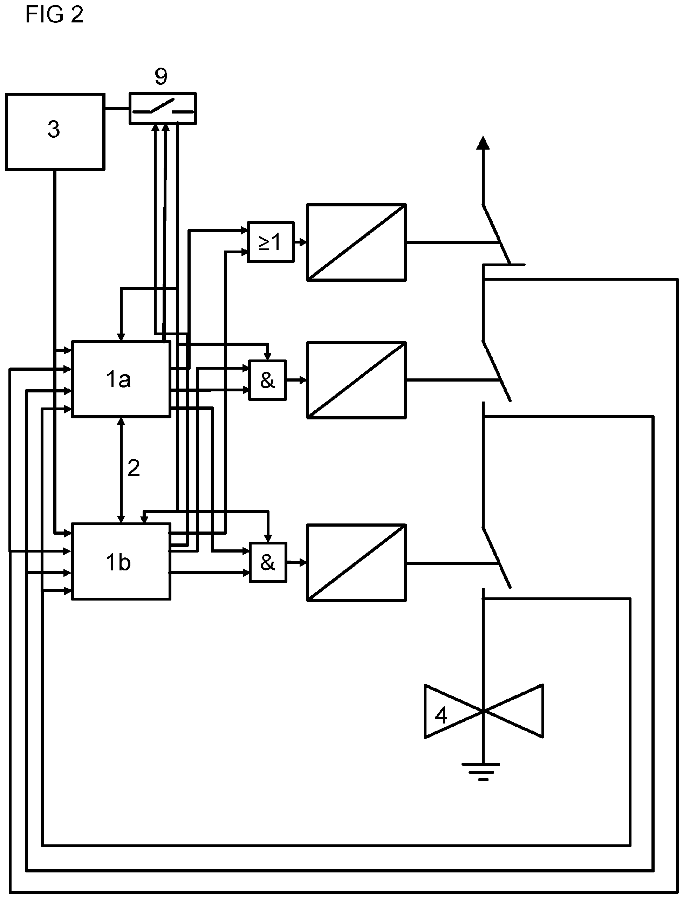

Die Schaltung aus FIG 2 umfasst zusätzlich eine einstellbare Strom- und/oder Spannungsversorgung 9. Die einstellbare Strom- und/oder Spannungsversorgung 9 weist einen Eingang auf. Jener Eingang ist mit einer der Recheneinheiten 1a verbunden. Insbesondere kann der Eingang der einstellbaren Strom- und/oder Spannungsversorgung 9 galvanisch mit einer der Recheneinheiten 1a verbunden sein.

Von der Recheneinheit 1a empfängt die einstellbare Strom- und/oder Spannungsversorgung 9 ein Signal wie beispielsweise ein oszillierendes Signal. Es ist vorgesehen, dass das Signal mit mindestens 20 Hertz und/oder 1 Kilohertz und/oder mit mindestens 5 Kilohertz und/oder mit mindestens 20 Kilohertz oszilliert. In einer ersten Ausführungsform stellt die Strom- und/oder Spannungsversorgung 9 genau dann ein Strom- und/der Spannungssignal bereit, wenn ein Signal von der Recheneinheit 1a empfangen wird. In einer zweiten Ausführungsform ist jenes Strom- und/oder Spannungssignal eine Funktion der Frequenz des Signals aus der Recheneinheit 1a. Insbesondere kann das Strom- und/oder Spannungssignal proportional zur Frequenz des Signals aus der Recheneinheit 1a sein.

Die einstellbare Strom- und/oder Spannungsversorgung 9 ist verbunden mit einem Eingang des Und-Gliedes 8a. Das Und-Glied 8a schaltet demnach einen der Schalter 5b in Richtung des Ventils 4 leitend, wenn zusätzlich die einstellbare Strom- und/oder Spannungsversorgung 9 ein entsprechendes Signal sendet. Ohne ein entsprechendes Signal der Strom- und/oder Spannungsversorgung 9 leitet der Schalter 5b keinen elektrischen Strom. Ebenso leitet der Schalter 5b ohne ein entsprechendes Signal jeder der beiden Recheneinheiten 1a, 1b keinen elektrischen Strom.

Die einstellbare Strom- und/oder Spannungsversorgung 9 ist weiterhin verbunden mit einem Eingang des Und-Gliedes 8b. Das Und-Glied 8b schaltet demnach einen der Schalter 5c in Richtung des Ventils 4 leitend, wenn zusätzlich die einstellbare Strom- und/oder Spannungsversorgung 9 ein entsprechendes Signal sendet. Ohne ein entsprechendes Signal der Strom- und/oder Spannungsversorgung 9 leitet der Schalter 5c keinen elektrischen Strom. Ebenso leitet der Schalter 5c ohne ein entsprechendes Signal jeder der beiden Recheneinheiten 1a, 1b keinen elektrischen Strom.

In einer speziellen Ausführungsform umfasst die einstellbare Strom- und/oder Spannungsversorgung 9 getrennte Ausgänge für jedes der Und-Glieder 8a, 8b. Ein erster Ausgang ist mit dem Und-Glied 8a galvanisch verbunden. Der erste Ausgang kann insbesondere eine Sicherung gegenüber Kurzschlüssen umfassen. Das heisst, bei einem Kurzschluss im Und-Glied 8a oder in einer galvanischen Verbindung zum Und-Glied 8a bleiben andere Ausgänge der einstellbaren Strom- und/oder Spannungsversorgung 9 weitgehend stabil. Ein zweiter Ausgang ist mit dem Und-Glied 8b galvanisch verbunden. Der zweite Ausgang kann insbesondere eine Sicherung gegenüber Kurzschlüssen umfassen. Das heisst, bei einem Kurzschluss im Und-Glied 8b oder in einer galvanischen Verbindung zum Und-Glied 8b bleiben andere Ausgänge der einstellbaren Strom- und/oder Spannungsversorgung 9 weitgehend stabil.

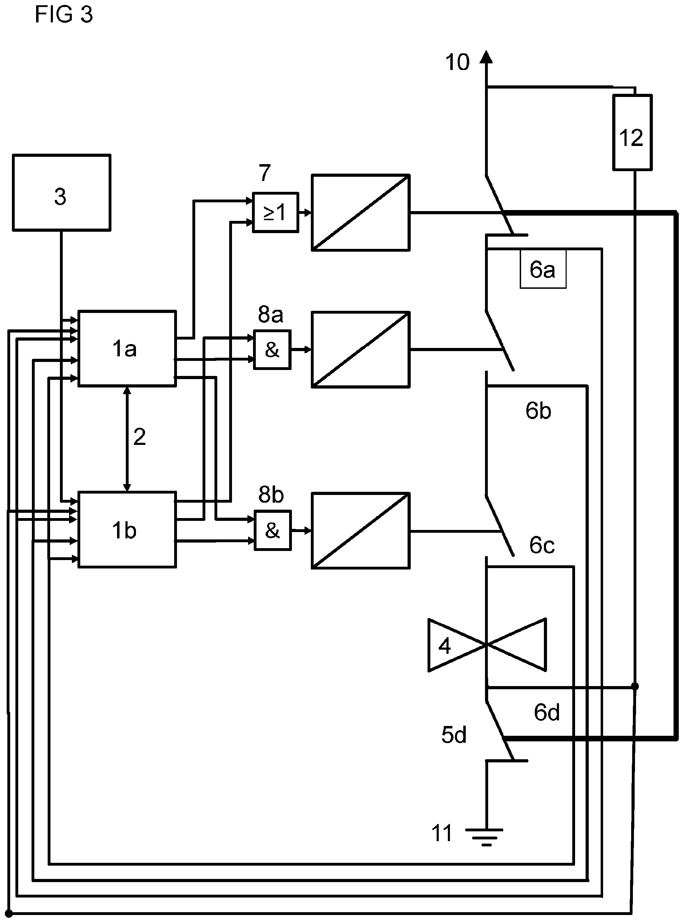

Die Schaltung gemäss FIG 3 umfasst einen weiteren Schalter 5d. Der weitere Schalter 5d umfasst vorzugsweise ein Relais. In einer weiteren Ausführungsform umfasst der Schalter 5d einen Transistor und/oder einen Feldeffekt-Transistor und/oder einen Bipolartransistor mit isolierter Gate-Elektrode. Ferner ist vorgesehen, dass der weitere Schalter 5d einen Röhrenverstärker und/oder einen Vakuumschalter umfasst. Röhrenverstärker können beispielsweise in solchen Schaltungen zum Einsatz kommen, in denen Robustheit im Vordergrund steht.

Der weitere Schalter 5d umfasst vorzugsweise einen Öffner ebenso wie der Schalter 5a aus FIG 1. Der weitere Schalter 5d ist mechanisch gekoppelt mit dem in FIG 1 gezeigten Schalter 5a. Mit anderen Worten, die Schalter 5a und 5d schalten synchron.

Die Schalter 5a - 5c sind schaltungstechnisch auf einer ersten Seite des Ventils 4 angeordnet. Vorzugsweise sind die Schalter 5a - 5c zwischen Ventil 4 und Strom- und/oder Spannungsversorgung des Ventils 10 angeordnet. Insbesondere ist der Öffner 5a zwischen Ventil 4 und Strom- und/oder Spannungsversorgung des Ventils 10 angeordnet. Der Schalter 5d ist schaltungstechnisch auf einer zweiten Seite des Ventils 4 angeordnet. Die schaltungstechnisch zweite Seite des Ventils 4 ist verschieden von der schaltungstechnisch ersten Seite des Ventils 4. Der Öffner 5d ist vorzugsweise zwischen Ventil 4 und Erde und/oder Masseanschluss 11 angeordnet.

Der Schalter 5d ist gekoppelt mit einem Positionsrückmelder 6d. Idealer Weise ist der Positionsrückmelder 6d Teil des Schalters 5d. Der Positionsrückmelder 6d ist verbunden mit einem Eingang der Recheneinheit 1a. Die Recheneinheit 1a umfasst vorzugsweise einen digitalen Eingang, welcher mit dem Positionsrückmelder 6d verbunden ist. In einer weiteren Ausführungsform umfasst die Recheneinheit 1a einen analogen Eingang, der mit dem Positionsrückmelder 6d verbunden ist. In einer speziellen Ausführungsform umfasst die Recheneinheit 1a einen Delta-Sigma Kreis zur Verarbeitung eines oder mehrerer Signale des Positionsrückmelders 6d. Der Positionsrückmelder 6d ist auch verbunden mit einem Eingang der Recheneinheit 1b. Die Recheneinheit 1b umfasst vorzugsweise einen digitalen Eingang, welcher mit dem Positionsrückmelder 6d verbunden ist. In einer weiteren Ausführungsform umfasst die Recheneinheit 1b einen analogen Eingang, der mit dem Positionsrückmelder 6d verbunden ist. In einer speziellen Ausführungsform umfasst die Recheneinheit 1b einen Delta-Sigma Kreis zur Verarbeitung eines oder mehrerer Signale des Positionsrückmelders 6d.

Vorzugsweise sind die Positionsrückmelder 6c und 6d mit demselben Eingang der Recheneinheit 1a verbunden. Insbesondere können die Positionsrückmelder 6c und 6d mit demselben Eingang der Recheneinheit 1a galvanisch verbunden sein. Vorzugsweise sind die Positionsrückmelder 6c und 6d auch mit demselben Eingang der Recheneinheit 1b verbunden. Insbesondere können die Positionsrückmelder 6c und 6d mit demselben Eingang der Recheneinheit 1b galvanisch verbunden sein.

Vorteilhaft sind die Positionsrückmelder 6c und 6d zudem über einen Widerstand oder mehrere Widerstände 12 mit der Strom- und/oder Spannungsversorgung des Ventils 10 verbunden. In einer Ausführungsform ist die Strom- und/oder Spannungsversorgung des Ventils 10 galvanisch gekoppelt mit der Strom- und/oder Spannungshauptversorgung der Schaltung 3. In einer weiteren Ausführungsform ist liegt die Strom- und/oder Spannungsversorgung des Ventils 10 an Netzspannung. Dabei bezieht sich die Netzspannung jegliche Spannung und Frequenz, die weltweit gängig ist. Die Netzspannung bezieht sich insbesondere auf 50 Hertz Wechselstrom bei 220 Volt bis 240 Volt oder auf 60 Hertz Wechselstrom bei ca. 110 Volt.

Ferner ist vorgesehen, ein Relais auf dessen Integrität zu prüfen. An einem Relais können beispielsweise infolge von Schalthandlungen Kontakte verschweissen. In der Folge lässt sich ein als Öffner ausgestaltetes Relais nicht mehr öffnen. Das Relais fällt dann aus.

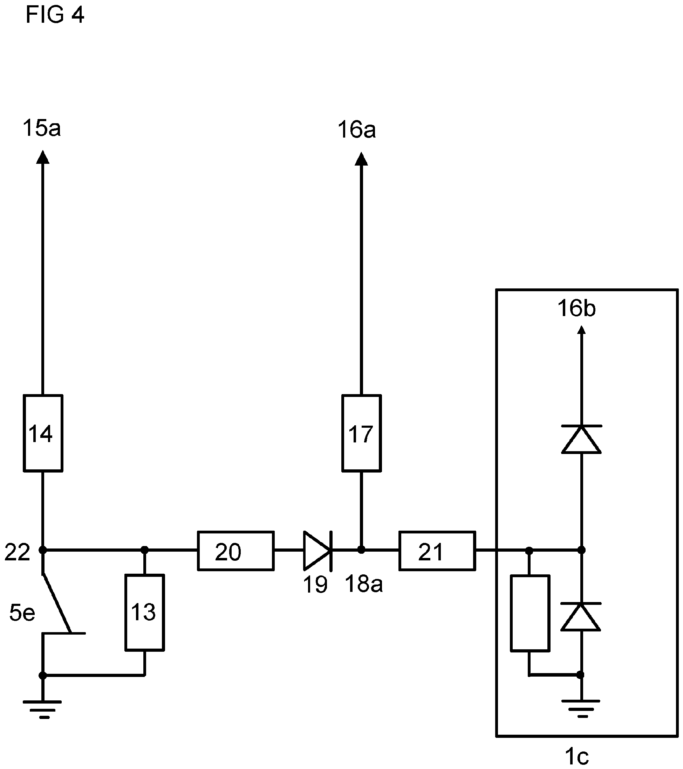

FIG 4 zeigt eine entsprechende Schaltung zur Prüfung eines Öffners 5e. Bei dem Öffner 5e kann es sich beispielsweise um das Relais 5d aus FIG 3 handeln. Dem Relais 5e ist ein Widerstand 13 von beispielsweise 10 Megaohm parallelgeschaltet. Ein Verbraucher 14 wie beispielsweise das Ventil 4 aus FIG 1 ist mit dem Relais 5e in Reihe geschaltet. Der Verbraucher 14 liegt an einer ersten Versorgungsspannung 15a. Die erste Versorgungsspannung 15a ist in einer Ausführungsform eine Netzspannung von 220 Volt bis 240 Volt bei 50 Hertz oder von ca. 110 Volt bei 60 Hertz.

Eine zweite Versorgungsspannung 16a, 16b versorgt die Schaltung aus FIG 4 mit typisch 1.2 Volt und/oder 2 Volt und/oder 3 Volt und/oder 3.3 Volt und/oder 5 Volt und/oder 6 Volt Gleichspannung. Von einem ersten Versorgungspunkt 16a führt ein Widerstand 17 von beispielsweise 6.8 Kiloohm an einen Knotenpunkt 18a der Schaltung. Eine Diode 19 und ein Widerstand 20 begrenzen die Ströme zwischen den Punkten mit der ersten Versorgungsspannung 15a und mit der zweiten Versorgungsspannung 16a. In einer Ausführungsform ist die Diode 19 eine Diode vom Typ 1N4007 und der Widerstand 20 beträgt 150 Kiloohm.

Vom Kontenpunkt 18a führt ein weiterer Widerstand von beispielsweise 47 Kiloohm in Richtung eines Eingangs einer Recheneinheit 1c. Die Recheneinheit 1c kann zum Beispiel eine der Recheneinheiten 1a oder 1b aus FIG 1 sein. Sie wird mit einer Versorgungsspannung 16b gespeist. Die Versorgungsspannung 16b der Recheneinheit 1c ist typischer Weise gleich gross wie die Versorgungsspannung 16a.

Wenn nun das Relais 5e einen Befehl zum Öffnen erhält und dabei aufgrund verschweisster Kontakte nicht öffnet, gelangt der Knotenpunkt 22 auf Erdpotenzial und/oder Massepotenzial. In der Folge wird das Signal am Eingang der Recheneinheit 1c nicht mehr von der Wechselspannung gemäss Versorgungsspannung 15a beeinflusst. Stattdessen weist der Eingang der Recheneinheit 1c im Wesentlichen die zweite Versorgungsspannung 16a auf. Die Recheneinheit 1c schliesst aus dem High-Signal an ihrem Eingang auf einen Fehler des Relais 5e.

In dem angegebenen Beispiel mit einem Widerstand 13 von 10 Megaohm führt ein Kontaktwiderstand am Relais 5e von weniger als 10 Megaohm zur Erkennung eines Fehlers. Nimmt der Widerstand 13 einen Wert von 25 Kiloohm an, so führt ein Kontaktwiderstand am Relais 5e von weniger als 25 Kiloohm zur Erkennung eines Fehlers. Andere Grenzen der Fehlererkennung sind durch Veränderung der Widerstände 17, 20 und/oder 21 und/oder durch Änderungen am Eingang der Recheneinheit 1c einstellbar. Der Wechselspannungsanteil am Eingang der Recheneinheit 1c kann durch einen zusätzlichen Zweig zwischen einer weiteren Versorgungsspannung 15b und einem weiteren Knotenpunkt 18b erhöht werden. Ausserdem werden durch den zusätzlichen Zweig zwischen der weiteren Versorgungsspannung 15b und dem weiteren Knotenpunkt 18b Abhängigkeiten vom Verbraucher 14 reduziert.

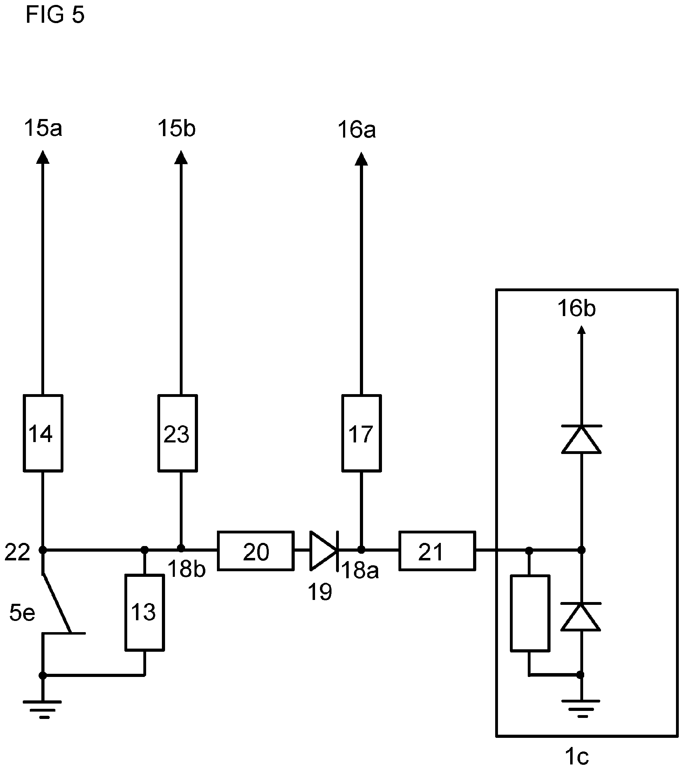

Eine entsprechende Schaltung zeigt FIG 5. Die weitere Versorgungsspannung 15b ist idealer Weise gleich der Versorgungs-spannung 15a. Der Widerstand 23 beträgt typisch 200 Kiloohm.

Mit anderen Worten, die vorliegende Offenbarung der Erfindung lehrt eine Schaltanordnung umfassend:
eine erste und eine zweite Recheneinheit (1a, 1b) jeweils umfassend einen ersten Eingang;
ein Oder-Glied (7), einen ersten Positionsrückmelder (6a) und einen ersten Schalter (5a), wobei das Oder-Glied (7) einen Ausgang aufweist und über den Ausgang des Oder-Gliedes (7) kommunikativ mit dem ersten Schalter (5a) verbunden ist;
wobei das Oder-Glied (7) einen ersten und einen zweiten Eingang aufweist und die erste Recheneinheit (1a) mit dem Oder-Glied (7) über den ersten Eingang des Oder-Gliedes (7) kommunikativ verbunden ist und die zweite Recheneinheit (1b) mit dem Oder-Glied (7) über den zweiten Eingang des Oder-Gliedes (7) kommunikativ verbunden ist;
wobei mindestens eine der Recheneinheiten (1a, 1b) ausgebildet ist, ein digitales AN-Signal an das Oder-Glied (7) zu senden, und das Oder-Glied (7) ausgebildet ist, bei Empfang des digitalen AN-Signales den ersten Schalter (5a) zu betätigen;
wobei der erste Positionsrückmelder (6a) dem ersten Schalter (5a) zugeordnet ist und kommunikativ mit dem ersten Eingang der ersten Recheneinheit (1a) und mit dem ersten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
   ein erstes Positionssignal vom ersten Positionsrückmelder (6a) zu lesen,
   das gelesene erste Positionssignal der jeweils anderen Recheneinheit (1b, 1a) zu senden, sodass die jeweils andere Recheneinheit (1b, 1a) das gesendete erste Positionssignal empfängt,
   das gelesene erste Positionssignal mit dem empfangenen ersten Positionssignal zu vergleichen und
   bei fehlender Übereinstimmung des gelesenen ersten Positionssignales und des empfangenen ersten Positionssignales eine Fehlermeldung auszugeben.

Vorzugsweise ist jede der Recheneinheiten (1a, 1b) kommunikativ verbunden mit der einstellbaren Strom- und/oder Spannungsversorgung (9) und ausgebildet, bei fehlender Übereinstimmung des gelesenen ersten Positionssignales und des empfangenen ersten Positionssignales ein Deaktivierungssignal an die einstellbare Strom- und/oder Spannungsversorgung (9) zu senden.

Vorteilhaft ist die erste Recheneinheit (1a) verbunden mit dem ersten Und-Glied (8a) und ist ausgebildet, bei fehlender Übereinstimmung des gelesenen ersten Positionssignales und des empfangenen ersten Positionssignales ein Deaktivierungssignal an das erste Und-Glied (8a) zu senden.

Weiterhin vorteilhaft ist die zweite Recheneinheit (1b) verbunden mit dem zweiten Und-Glied (8b) und ist ausgebildet, bei fehlender Übereinstimmung des gelesenen ersten Positionssignales und des empfangenen ersten Positionssignales ein Deaktivierungssignal an das zweite Und-Glied (8b) zu senden. Die erste Recheneinheit (1a) umfasst einen ersten Eingang. Die zweite Recheneinheit (1b) umfasst einen ersten Eingang.

Die Schaltanordnung der vorliegenden Erfindung ist vorteilhaft eine Schaltanordnung für einen Feuerungsautomaten. In einer speziellen Ausführungsform ist die Schaltanordnung eine Schaltanordnung eines Feuerungsautomaten. Gemäss einem Aspekt der vorliegenden Erfindung ist die Schaltanordnung eine Schaltungsanordnung.

Das Oder-Glied (7) und/oder der Ausgang des Oder-Gliedes (7) sind mit dem ersten Schalter (5a) vorzugsweise kommunikativ und unidirektional verbunden. Das Oder-Glied (7) sendet über den Ausgang des Oder-Gliedes (7) Signale an den ersten Schalter (5a). Der erste Schalter (5a) empfängt Signale von dem Ausgang des Oder-Gliedes (7). Der erste Schalter (5a) sendet keine Signale an das Oder-Glied (7). Der erste Schalter (5a) sendet keine Signale an den Ausgang des Oder-Gliedes (7). Das Oder-Glied (7) und/oder der Ausgang des Oder-Gliedes (7) empfangen keine Signale vom ersten Schalter (5a). Unidirektionale Verbindungen verringern die Komplexität der Schaltanordnung.

Die erste Recheneinheit (1a) ist mit dem ersten Eingang des Oder-Gliedes (7) vorzugsweise kommunikativ und unidirektional verbunden. Die erste Recheneinheit (1a) sendet Signale an den ersten Eingang des Oder-Gliedes (7). Der erste Eingang des Oder-Gliedes (7) empfängt Signale von der ersten Recheneinheit (1a). Das Oder-Glied (7) und/oder der erste Eingang des Oder-Gliedes (7) senden keine Signale an die erste Recheneinheit (1a). Die erste Recheneinheit (1a) empfängt keine Signale vom Oder-Glied (7) und/oder vom ersten Eingang des Oder-Gliedes (7).

Die zweite Recheneinheit (1b) ist mit dem zweiten Eingang des Oder-Gliedes (7) vorzugsweise kommunikativ und unidirektional verbunden. Die zweite Recheneinheit (1b) sendet Signale an den zweiten Eingang des Oder-Gliedes (7). Der zweite Eingang des Oder-Gliedes (7) empfängt Signale von der zweiten Recheneinheit (1b). Das Oder-Glied (7) und/oder der zweite Eingang des Oder-Gliedes (7) senden keine Signale an die zweite Recheneinheit (1b). Die zweite Recheneinheit (1b) empfängt keine Signale vom Oder-Glied (7) und/oder vom zweiten Eingang des Oder-Gliedes (7).

Das digitale AN-Signal ist vorzugsweise ein Signal mit einer Spannung zwischen 2.4 Volt und 6 Volt. In einer Ausführungsform ist das digitale AN-Signal ein Signal mit einer Spannung zwischen 4.5 Volt und 5.5 Volt. In einer speziellen Ausführungsform ist das digitale AN-Signal ein Signal mit einer Spannung von 5 Volt.

In einer Ausführungsform ist das Oder-Glied (7) ausgebildet, bei Empfang des digitalen AN-Signales von mindestens einer der Recheneinheiten (1a, 1b) ein Schaltsignal zu erzeugen und an den ersten Schalter (5a) zu senden. Bei Empfang des Schaltsignales tätigt der erste Schalter (5a) eine Schalthandlung. In einer speziellen Ausführungsform ist der erste Schalter (5a) ein Öffner. Mithin ist der erste Schalter (5a) ausgebildet, bei Empfang des Schaltsignales zu öffnen. Es ist vorgesehen, dass das Schaltsignal ein Signal mit einer Spannung zwischen 5 Volt und 30 Volt ist. In einer Ausführungsform ist das Schaltsignal ein Signal mit einer Spannung zwischen 4.5 Volt und 5.5 Volt. In einer speziellen Ausführungsform ist das Schaltsignal ein Signal mit einer Spannung von 5 Volt. In einer weiteren speziellen Ausführungsform ist das Schaltsignal ein Signal mit einer Spannung von 6 Volt und/oder 12 Volt und/oder 24 Volt.

Der erste Positionsrückmelder (6a) ist vorzugsweise kommunikativ und unidirektional mit dem ersten Eingang der ersten Recheneinheit (1a) und mit dem ersten Eingang der zweiten Recheneinheit (1b) verbunden. Der erste Positionsrückmelder (6a) sendet ein erstes Positionssignal an die erste Recheneinheit (1a) über den ersten Eingang der ersten Recheneinheit (1a) und an die zweite Recheneinheit (1b) über den ersten Eingang der zweiten Recheneinheit (1b). Die erste Recheneinheit (1a) sendet über den ersten Eingang der ersten Recheneinheit (1a) kein Signal und kein erstes Positionssignal an den ersten Positionsrückmelder (6a). Die zweite Recheneinheit (1b) sendet über den ersten Eingang der zweiten Recheneinheit (1b) kein Signal und kein erstes Positionssignal an den ersten Positionsrückmelder (6a).

Die erste und die zweite Recheneinheit (1a, 1b) sind untereinander vorzugsweise kommunikativ und bidirektional verbunden. Idealer Weise umfasst die Schaltanordnung einen bidirektionalen Bus (2). Die erste Recheneinheit (1a) ist verbunden, insbesondere kommunikativ verbunden, mit dem bidirektionalen Bus (2). Die zweite Recheneinheit (1b) ist ebenfalls verbunden, insbesondere kommunikativ verbunden, mit dem bidirektionalen Bus (2).

Es ist vorgesehen, dass jede der Recheneinheiten (1a, 1b) ausgebildet ist, bei fehlender Übereinstimmung des gelesenen ersten Positionssignales und des empfangenen ersten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen ersten Positionssignales und des empfangenen ersten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen ersten Positionssignales und des empfangenen ersten Positionssignales eine Fehlermeldung auszugeben, indem anhand der jeweiligen Schnittstelle ein Fehlersignal an die übergeordnete Überwachungseinrichtung gesendet wird.

In einer Ausführungsform umfasst die Schaltanordnung ein Ventil (4). Der erste Schalter (5a) und das Ventil (4) sind in Reihe geschaltet.

Die vorliegende Offenbarung der Erfindung lehrt weiterhin eine der vorgenannten Schaltanordnungen,
wobei jede der Recheneinheiten (1a, 1b) ausgebildet ist, ein digitales AN-Signal an das Oder-Glied (7) zu senden;
wobei das Oder-Glied (7) ausgebildet ist, bei Empfang mindestens eines digitalen AN-Signales den ersten Schalter (5a) zu betätigen;
wobei jede der Recheneinheiten (1a, 1b) ausgebildet ist:
   nach dem Versenden des digitalen AN-Signales ein erstes Positionssignal vom ersten Positionsrückmelder (6a) zu lesen,
   das gelesene erste Positionssignal der jeweils anderen Recheneinheit (1b, 1a) zu senden, sodass die jeweils andere Recheneinheit (1b, 1a) das gesendete erste Positionssignal empfängt,
   das gelesene erste Positionssignal mit dem empfangenen ersten Positionssignal zu vergleichen und
   bei fehlender Übereinstimmung des gelesenen ersten Positionssignales und des empfangenen ersten Positionssignales eine Fehlermeldung auszugeben.

Vorteilhaft ist jede der Recheneinheiten (1a, 1b) ausgebildet, maximal 5 Sekunden nach dem Versenden des digitalen AN-Signales ein erstes Positionssignal vom ersten Positionsrückmelder (6a) zu lesen. In einer speziellen Ausführungsform ist jede der Recheneinheiten (1a, 1b) ausgebildet, maximal 3 Sekunden nach dem Versenden des digitalen AN-Signales ein erstes Positionssignal vom ersten Positionsrückmelder (6a) zu lesen. In einer weiteren Ausführungsform ist jede der Recheneinheiten (1a, 1b) ausgebildet, maximal 1 Sekunde nach dem Versenden des digitalen AN-Signales ein erstes Positionssignal vom ersten Positionsrückmelder (6a) zu lesen. Ein rasches Auslesen des ersten Positionssignales bewirkt eine zeitnahe Kenntnis von defekten Schaltern (5a - 5d) und/oder von defekten Recheneinheiten (1a, 1b).

Die vorliegende Offenbarung der Erfindung lehrt ferner eine der vorgenannten Schaltanordnungen,
wobei die Recheneinheiten (1a, 1b) untereinander kommunikativ verbunden sind und die erste Recheneinheiten (1a) ausgebildet ist:
ein digitales AN-Signal an das Oder-Glied (7) zu senden und
infolge des Versendens des digitalen AN-Signales an das Oder-Glied (7) der zweiten Recheneinheit (1b) ein Hinweissignal zu senden;
wobei jede der Recheneinheiten (1a, 1b) ausgebildet ist:
   nach dem Versenden des digitalen AN-Signales ein erstes Positionssignal vom ersten Positionsrückmelder (6a) zu lesen,
   das gelesene erste Positionssignal der jeweils anderen Recheneinheit (1b, 1a) zu senden, sodass die jeweils andere Recheneinheit (1b, 1a) das gesendete erste Positionssignal empfängt,
   das gelesene erste Positionssignal mit dem empfangenen ersten Positionssignal zu vergleichen und
   bei fehlender Übereinstimmung des gelesenen ersten Positionssignales und des empfangenen ersten Positionssignales eine Fehlermeldung auszugeben.

Vorteilhaft ist die erste Recheneinheit (1a) ausgebildet, maximal 10 Microsekunden nach dem Versenden des digitalen AN-Signales ein Hinweissignal an die zweite Recheneinheit (1b) zu senden. In einer speziellen Ausführungsform ist die erste Recheneinheit (1a) ausgebildet, maximal 5 Sekunden nach dem Versenden des digitalen AN-Signales ein Hinweissignal an die zweite Recheneinheit (1b) zu senden. In einer weiteren Ausführungsform ist die erste Recheneinheit (1a) ausgebildet, maximal 3 Sekunden nach dem Versenden des digitalen AN-Signales ein Hinweissignal an die zweite Recheneinheit (1b) zu senden. In einer speziellen Ausführungsform ist die erste Recheneinheit (1a) ausgebildet, maximal 1 Sekunde nach dem Versenden des digitalen AN-Signales ein Hinweissignal an die zweite Recheneinheit (1b) zu senden. Eine zeitnahe Übermittlung des Hinweissignales vermindert Synchronisationsprobleme und/oder Abstimmungsprobleme zwischen den Recheneinheiten (1a, 1b).

Die vorliegende Offenbarung der Erfindung lehrt ausserdem eine der vorgenannten Schaltanordnungen,
wobei die Schaltanordnung zusätzlich eine Strom- und/oder Spannungshauptversorgung (3) umfasst;
wobei die erste Recheneinheit (1a) ein Fehlerregister und einen Versorgungseingang aufweist;
wobei die Strom- und/oder Spannungshauptversorgung (3) mit dem Versorgungseingang der ersten Recheneinheit (1a) galvanisch verbunden ist;
wobei die erste Recheneinheit (1a) eine Einheit zur zeitlichen Überwachung eines Versorgungssignales am Versorgungseingang der ersten Recheneinheit (1a) aufweist; und
wobei die Einheit zur zeitlichen Überwachung des Versorgungssignales ausgebildet ist, einen Wert im Fehlerregister zu setzen, wenn das Versorgungssignal einen vorgegebenen Wert unterschreitet.

Es ist vorgesehen, dass das Fehlerregister ein Fehlerregister der Einheit zur zeitlichen Überwachung des Versorgungssignales ist. Ferner ist vorgesehen, dass die Einheit zur zeitlichen Überwachung des Versorgungssignales eine Einheit zur Brownout-Detektion und/oder eine Einheit zur Spannungsabfall-Detektion umfasst. Weiterhin ist vorgesehen, dass die Einheit zur zeitlichen Überwachung des Versorgungssignales eine Einheit zur Brownout-Detektion und/oder eine Einheit zur Spannungsabfall-Detektion ist.

Die vorliegende Offenbarung der Erfindung lehrt weiterhin eine der vorgenannten Schaltanordnungen,
wobei die Schaltanordnung zusätzlich eine Strom- und/oder Spannungshauptversorgung (3) umfasst;
wobei jede der Recheneinheiten (1a, 1b) je ein Fehlerregister und je einen Versorgungseingang aufweist;
wobei die Strom- und/oder Spannungshauptversorgung (3) mit jedem der Versorgungseingänge der Recheneinheiten (1a, 1b) galvanisch verbunden ist;
wobei die erste Recheneinheit (1a) eine erste Einheit zur zeitlichen Überwachung eines Versorgungssignales am Versorgungseingang der ersten Recheneinheit (1a) aufweist;
wobei die erste Einheit zur zeitlichen Überwachung des Versorgungssignales ausgebildet ist, einen Wert im Fehlerregister der ersten Recheneinheit (1a) zu setzen, wenn das Versorgungssignal am Versorgungseingang der ersten Recheneinheit (1a) einen vorgegebenen Wert unterschreitet;
wobei die zweite Recheneinheit (1b) eine zweite Einheit zur zeitlichen Überwachung eines Versorgungssignales am Versorgungseingang der zweiten Recheneinheit (1b) aufweist; und
wobei die zweite Einheit zur zeitlichen Überwachung des Versorgungssignales ausgebildet ist, einen Wert im Fehlerregister der zweiten Recheneinheit (1b) zu setzen, wenn das Versorgungssignal am Versorgungseingang der zweiten Recheneinheit (1b) einen vorgegebenen Wert unterschreitet.

Die vorliegende Offenbarung der Erfindung lehrt darüber hinaus eine der vorgenannten Schaltanordnungen,
wobei die erste Recheneinheit (1a) zusätzlich einen zweiten Eingang umfasst und die zweite Recheneinheit (1b) zusätzlich einen zweiten Eingang umfasst;
wobei die Schaltanordnung zusätzlich umfasst:
   ein erstes Und-Glied (8a), einen zweiten Positionsrückmelder (6b) und einen zweiten Schalter (5b), wobei das erste Und-Glied (8a) einen Ausgang aufweist und über den Ausgang des ersten Und-Gliedes (8a) kommunikativ mit dem zweiten Schalter (5b) verbunden ist;
   wobei das erste Und-Glied (8a) einen ersten und einen zweiten Eingang aufweist und die erste Recheneinheit (1a) mit dem ersten Und-Glied (8a) über den ersten Eingang des ersten Und-Gliedes (8a) kommunikativ verbunden ist und die zweite Recheneinheit (1b) mit dem ersten Und-Glied (8a) über den zweiten Eingang des ersten Und-Glied (8a) kommunikativ verbunden ist;
   wobei jede der Recheneinheiten (1a, 1b) ausgebildet ist, ein digitales AN-Signal an das erste Und-Glied (8a) zu senden, und das erste Und-Glied (8a) ausgebildet ist, ausschliesslich bei Empfang beider digitaler AN-Signale den zweiten Schalter (5b) zu betätigen;
   wobei der zweite Positionsrückmelder (6b) dem zweiten Schalter (5b) zugeordnet ist und kommunikativ mit dem zweiten Eingang der ersten Recheneinheit (1a) und mit dem zweiten Eingang der zweiten Recheneinheit (1b) verbunden ist;
   wobei die Recheneinheiten (1a, 1b) untereinander kommunikativ verbunden sind und jede der Recheneinheiten (1a, 1b) ausgebildet ist:
      je ein zweites Positionssignal vom zweiten Positionsrückmelder (6b) zu lesen,
      das gelesene zweite Positionssignal der jeweils anderen Recheneinheit (1b, 1a) zu senden, sodass die jeweils andere Recheneinheit (1b, 1a) das gesendete zweite Positionssignal empfängt,
      das gelesene zweite Positionssignal mit dem empfangenen zweiten Positionssignal zu vergleichen und
      bei fehlender Übereinstimmung des gelesenen zweiten Positionssignales und des empfangenen zweiten Positionssignales eine Fehlermeldung auszugeben.

Der erste Schalter (5a) ist verschieden vom zweiten Schalter (5b). Der erste Positionsrückmelder (6a) ist verschieden vom zweiten Positionsrückmelder (6b).

Das erste Und-Glied (8a) und/oder der Ausgang des ersten Und-Gliedes (8a) sind mit dem zweiten Schalter (5b) vorzugsweise kommunikativ und unidirektional verbunden. Das erste Und-Glied (8a) sendet über den Ausgang des ersten Und-Gliedes (8a) Signale an den zweiten Schalter (5b). Der zweite Schalter (5b) empfängt Signale von dem Ausgang des ersten Und-Gliedes (8a). Der zweite Schalter (5b) sendet keine Signale an das erste Und-Glied (8a). Der zweite Schalter (5b) sendet keine Signale an den Ausgang des ersten Und-Gliedes (8a). Das erste Und-Glied (8a) und/oder der Ausgang des ersten Und-Gliedes (8a) empfangen keine Signale vom zweiten Schalter (5b).

Die erste Recheneinheit (1a) ist mit dem zweiten Eingang des ersten Und-Gliedes (8a) vorzugsweise kommunikativ und unidirektional verbunden. Die erste Recheneinheit (1a) sendet Signale an den ersten Eingang des ersten Und-Gliedes (8a). Der erste Eingang des ersten Und-Gliedes (8a) empfängt Signale von der ersten Recheneinheit (1a). Das erste Und-Glied (8a) und/oder der erste Eingang des ersten Und-Gliedes (8a) senden keine Signale an die erste Recheneinheit (1a). Die erste Recheneinheit (1a) empfängt keine Signale vom ersten Und-Glied (8a) und/oder vom ersten Eingang des ersten Und-Gliedes (8a).

Die zweite Recheneinheit (1b) ist mit dem zweiten Eingang des ersten Und-Gliedes (8a) vorzugsweise kommunikativ und unidirektional verbunden. Die zweite Recheneinheit (1b) sendet Signale an den zweiten Eingang des ersten Und-Gliedes (8a). Der zweite Eingang des ersten Und-Gliedes (8a) empfängt Signale von der zweiten Recheneinheit (1b). Das erste Und-Glied (8a) und/oder der zweite Eingang des ersten Und-Gliedes (8a) senden keine Signale an die zweite Recheneinheit (1b). Die zweite Recheneinheit (1b) empfängt keine Signale vom ersten Und-Glied (8a) und/oder vom zweiten Eingang des ersten Und-Gliedes (8a).

In einer Ausführungsform ist das erste Und-Glied (8a) ausgebildet, ausschliesslich bei Empfang der digitalen AN-Signale beider Recheneinheiten (1a, 1b) ein Schaltsignal zu erzeugen und an den zweiten Schalter (5b) zu senden. Bei Empfang des Schaltsignales tätigt der zweite Schalter (5b) eine Schalthandlung. In einer speziellen Ausführungsform ist der zweite Schalter (5b) ein Schliesser. Mithin ist der zweite Schalter (5b) ausgebildet, bei Empfang des Schaltsignales zu schliessen. Es ist vorgesehen, dass das Schaltsignal ein Signal mit einer Spannung zwischen 5 Volt und 30 Volt ist. In einer Ausführungsform ist das Schaltsignal ein Signal mit einer Spannung zwischen 4.5 Volt und 5.5 Volt. In einer speziellen Ausführungsform ist das Schaltsignal ein Signal mit einer Spannung von 5 Volt. In einer weiteren speziellen Ausführungsform ist das Schaltsignal ein Signal mit einer Spannung von 6 Volt und/oder 12 Volt und/oder 24 Volt.

Der zweite Positionsrückmelder (6b) ist vorzugsweise kommunikativ und unidirektional mit dem zweiten Eingang der ersten Recheneinheit (1a) und mit dem zweiten Eingang der zweiten Recheneinheit (1b) verbunden. Der zweite Positionsrückmelder (6b) sendet ein zweites Positionssignal an die erste Recheneinheit (1a) über den zweiten Eingang der ersten Recheneinheit (1a) und an die zweite Recheneinheit (1b) über den zweiten Eingang der zweiten Recheneinheit (1b). Die erste Recheneinheit (1a) sendet über den zweiten Eingang der ersten Recheneinheit (1a) kein Signal und kein zweites Positionssignal an den zweiten Positionsrückmelder (6b). Die zweite Recheneinheit (1b) sendet über den zweiten Eingang der zweiten Recheneinheit (1b) kein Signal und kein zweites Positionssignal an den zweiten Positionsrückmelder (6b).

Es ist vorgesehen, dass jede der Recheneinheiten (1a, 1b) ausgebildet ist, bei fehlender Übereinstimmung des gelesenen zweiten Positionssignales und des empfangenen zweiten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen zweiten Positionssignales und des empfangenen zweiten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen zweiten Positionssignales und des empfangenen zweiten Positionssignales eine Fehlermeldung auszugeben, indem anhand der jeweiligen Schnittstelle ein Fehlersignal an die übergeordnete Überwachungseinrichtung gesendet wird.

In einer Ausführungsform umfasst die Schaltanordnung ein Ventil (4). Der zweite Schalter (5b) und das Ventil (4) sind in Reihe geschaltet. Vorteilhaft sind der erste Schalter (5a), der zweite Schalter (5b) und das Ventil (4) in Reihe geschaltet.

Die vorliegende Offenbarung der Erfindung lehrt weiterhin eine der vorgenannten Schaltanordnungen, wobei die Schaltanordnung umfasst:
eine einstellbare Strom- und/oder Spannungsversorgung (9);
wobei die einstellbare Strom- und/oder Spannungsversorgung (9) einen Ausgang und einen Freigabeeingang umfasst und die erste Recheneinheit (1a) einen Freigabeausgang umfasst;
wobei die erste Recheneinheit (1a) über den Freigabeausgang der ersten Recheneinheit (1a) und über den Freigabeeingang der einstellbaren Strom- und/oder Spannungsversorgung (9) mit der einstellbaren Strom- und/oder Spannungsversorgung (9) kommunikativ verbunden ist;
wobei die erste Recheneinheit (1a) ausgebildet ist, ein Freigabesignal an die einstellbare Strom- und/oder Spannungsversorgung (9) zu senden; und
wobei die einstellbare Strom- und/oder Spannungsversorgung (9) ausgebildet ist, als Antwort auf einen Empfang des Freigabesignales ein digitales AN-Signal an ihrem Ausgang bereitzustellen.

Die vorliegende Offenbarung der Erfindung lehrt weiterhin eine der vorgenannten Schaltanordnungen, wobei die Schaltanordnung umfasst:
eine einstellbare Strom- und/oder Spannungsversorgung (9);
wobei die einstellbare Strom- und/oder Spannungsversorgung (9) einen Ausgang und einen Freigabeeingang umfasst und die zweite Recheneinheit (1b) einen Freigabeausgang umfasst;
wobei die zweite Recheneinheit (1b) über den Freigabeausgang der zweiten Recheneinheit (1b) und über den Freigabeeingang der einstellbaren Strom- und/oder Spannungsversorgung (9) mit der einstellbaren Strom- und/oder Spannungsversorgung (9) kommunikativ verbunden ist;
wobei die zweite Recheneinheit (1b) ausgebildet ist, ein Freigabesignal an die einstellbare Strom- und/oder Spannungsversorgung (9) zu senden; und
wobei die einstellbare Strom- und/oder Spannungsversorgung (9) ausgebildet ist, als Antwort auf einen Empfang des Freigabesignales ein digitales AN-Signal an ihrem Ausgang bereitzustellen.

Es ist vorgesehen, dass das Freigabesignal ein oszillierendes Signal, insbesondere ein oszillierendes Rechtecksignal, mit einer Frequenz von mindestens 20 Hertz und/oder 1 Kilohertz und/oder 5 Kilohertz, vorzugsweise mindestens 10 Kilohertz, speziell bevorzugt mindestens 20 Kilohertz, ist.

Die vorliegende Offenbarung der Erfindung lehrt ferner eine der vorgenannten Schaltanordnungen mit einem Und-Glied (8a) und einer einstellbaren Strom- und/oder Spannungsversorgung (9),
wobei das erste Und-Glied (8a) einen dritten Eingang umfasst;
wobei der Ausgang der einstellbaren Strom- und/oder Spannungsversorgung (9) mit dem dritten Eingang des ersten Und-Gliedes (8a) galvanisch verbunden ist;
wobei das erste Und-Glied (8a) ausgebildet ist, genau dann den zweiten Schalter (5b) zu betätigen, wenn
am ersten Eingang des ersten Und-Gliedes (8a) ein digitales AN-Signal anliegt und
am zweiten Eingang des ersten Und-Gliedes (8a) ein digitales AN-Signal anliegt und
am dritten Eingang des ersten Und-Gliedes (8a) ein digitales AN-Signal anliegt.

Wenn eine der Bedingungen, wonach
am ersten Eingang des ersten Und-Gliedes (8a) ein digitales AN-Signal anliegt und
am zweiten Eingang des ersten Und-Gliedes (8a) ein digitales AN-Signal anliegt und
am dritten Eingang des ersten Und-Gliedes (8a) ein digitales AN-Signal anliegt,
nicht erfüllt ist, wird der zweite Schalter (5b) nicht bestätigt.

Die vorliegende Offenbarung der Erfindung lehrt ausserdem eine der vorgenannten Schaltanordnungen,
wobei die erste Recheneinheit (1a) zusätzlich einen dritten Eingang umfasst und die zweite Recheneinheit (1b) zusätzlich einen dritten Eingang umfasst;
wobei die Schaltanordnung zusätzlich umfasst:
ein zweites Und-Glied (8b), einen dritten Positionsrückmelder (6c) und einen dritten Schalter (5c), wobei das zweite Und-Glied (8b) einen Ausgang aufweist und über den Ausgang des zweiten Und-Gliedes (8b) kommunikativ mit dem dritten Schalter (5c) verbunden ist;
wobei das zweite Und-Glied (8b) einen ersten und einen zweiten Eingang aufweist und die erste Recheneinheit (1a) mit dem zweiten Und-Glied (8b) über den ersten Eingang des zweiten Und-Gliedes (8b) kommunikativ verbunden ist und die zweite Recheneinheit (1b) mit dem zweiten Und-Glied (8b) über den zweiten Eingang des zweiten Und-Glied (8b) kommunikativ verbunden ist;
wobei jede der Recheneinheiten (1a, 1b) ausgebildet ist, ein digitales AN-Signal an das zweite Und-Glied (8b) zu senden, und das zweite Und-Glied (8b) ausgebildet ist, ausschliesslich bei Empfang beider digitaler AN-Signale den dritten Schalter (5c) zu betätigen;
wobei der dritte Positionsrückmelder (6c) dem dritten Schalter (5c) zugeordnet ist und kommunikativ mit dem dritten Eingang der ersten Recheneinheit (1a) und mit dem dritten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
   je ein drittes Positionssignal vom dritten Positionsrückmelder (6c) zu lesen,
   das gelesene dritte Positionssignal der jeweils anderen Recheneinheit (1b, 1a) zu senden, sodass die jeweils andere Recheneinheit (1b, 1a) das gesendete dritte Positionssignal empfängt,
   das gelesene dritte Positionssignal mit dem empfangenen dritten Positionssignal zu vergleichen und
   bei fehlender Übereinstimmung des gelesenen dritten Positionssignales und des empfangenen dritten Positionssignales eine Fehlermeldung auszugeben.

Der erste Schalter (5a) ist verschieden vom dritten Schalter (5c). Der zweite Schalter (5b) ist verschieden vom dritten Schalter (5c). Der erste Positionsrückmelder (6a) ist verschieden vom dritten Positionsrückmelder (6c). Der zweite Positionsrückmelder (6b) ist verschieden vom dritten Positionsrückmelder (6c).

Das zweite Und-Glied (8b) und/oder der Ausgang des zweiten Und-Gliedes (8b) sind mit dem dritten Schalter (5c) vorzugsweise kommunikativ und unidirektional verbunden. Das zweite Und-Glied (8b) sendet über den Ausgang des zweiten Und-Gliedes (8b) Signale an den dritten Schalter (5c). Der dritte Schalter (5c) empfängt Signale von dem Ausgang des zweiten Und-Gliedes (8b). Der dritte Schalter (5c) sendet keine Signale an das zweite Und-Glied (8b). Der dritte Schalter (5c) sendet keine Signale an den Ausgang des zweiten Und-Gliedes (8b). Das zweite Und-Glied (8b) und/oder der Ausgang des zweiten Und-Gliedes (8b) empfangen keine Signale vom dritten Schalter (5c).

Die erste Recheneinheit (1a) ist mit dem zweiten Eingang des zweiten Und-Gliedes (8b) vorzugsweise kommunikativ und unidirektional verbunden. Die erste Recheneinheit (1a) sendet Signale an den ersten Eingang des zweiten Und-Gliedes (8b). Der erste Eingang des zweiten Und-Gliedes (8b) empfängt Signale von der ersten Recheneinheit (1a). Das zweite Und-Glied (8b) und/oder der erste Eingang des zweiten Und-Gliedes (8b) senden keine Signale an die erste Recheneinheit (1a). Die erste Recheneinheit (1a) empfängt keine Signale vom zweiten Und-Glied (8b) und/oder vom ersten Eingang des zweiten Und-Gliedes (8b).

Die zweite Recheneinheit (1b) ist mit dem zweiten Eingang des zweiten Und-Gliedes (8b) vorzugsweise kommunikativ und unidirektional verbunden. Die zweite Recheneinheit (1b) sendet Signale an den zweiten Eingang des zweiten Und-Gliedes (8b). Der zweite Eingang des zweiten Und-Gliedes (8b) empfängt Signale von der zweiten Recheneinheit (1b). Das zweite Und-Glied (8b) und/oder der zweite Eingang des zweiten Und-Gliedes (8b) senden keine Signale an die zweite Recheneinheit (1b). Die zweite Recheneinheit (1b) empfängt keine Signale vom zweiten Und-Glied (8b) und/oder vom zweiten Eingang des zweiten Und-Gliedes (8b).

In einer Ausführungsform ist das zweite Und-Glied (8b) ausgebildet, ausschliesslich bei Empfang der digitalen AN-Signale beider Recheneinheiten (1a, 1b) ein Schaltsignal zu erzeugen und an den dritten Schalter (5c) zu senden. Bei Empfang des Schaltsignales tätigt der dritte Schalter (5c) eine Schalthandlung. In einer speziellen Ausführungsform ist der dritte Schalter (5c) ein Schliesser. Mithin ist der dritte Schalter (5c) ausgebildet, bei Empfang des Schaltsignales zu schliessen. Es ist vorgesehen, dass das Schaltsignal ein Signal mit einer Spannung zwischen 2.4 Volt und 6 Volt ist. In einer Ausführungsform ist das Schaltsignal ein Signal mit einer Spannung zwischen 4.5 Volt und 5.5 Volt. In einer speziellen Ausführungsform ist das Schaltsignal ein Signal mit einer Spannung von 5 Volt.

Der dritte Positionsrückmelder (6c) ist vorzugsweise kommunikativ und unidirektional mit dem dritten Eingang der ersten Recheneinheit (1a) und mit dem dritten Eingang der zweiten Recheneinheit (1b) verbunden. Der dritte Positionsrückmelder (6c) sendet ein drittes Positionssignal an die erste Recheneinheit (1a) über den dritten Eingang der ersten Recheneinheit (1a) und an die zweite Recheneinheit (1b) über den dritten Eingang der zweiten Recheneinheit (1b). Die erste Recheneinheit (1a) sendet über den dritten Eingang der ersten Recheneinheit (1a) kein Signal und kein drittes Positionssignal an den dritten Positionsrückmelder (6c). Die zweite Recheneinheit (1b) sendet über den dritten Eingang der zweiten Recheneinheit (1b) kein Signal und kein drittes Positionssignal an den dritten Positionsrückmelder (6c).

Es ist vorgesehen, dass jede der Recheneinheiten (1a, 1b) ausgebildet ist, bei fehlender Übereinstimmung des gelesenen dritten Positionssignales und des empfangenen dritten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen dritten Positionssignales und des empfangenen dritten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen dritten Positionssignales und des empfangenen dritten Positionssignales eine Fehlermeldung auszugeben, indem anhand der jeweiligen Schnittstelle ein Fehlersignal an die übergeordnete Überwachungseinrichtung gesendet wird.

In einer Ausführungsform umfasst die Schaltanordnung ein Ventil (4). Der dritte Schalter (5c) und das Ventil (4) sind in Reihe geschaltet. Vorteilhaft sind der erste Schalter (5a), der zweite Schalter (5b), der dritte Schalter (5c) und das Ventil (4) in Reihe geschaltet. Besonders vorteilhaft sind der erste Schalter (5a), der zweite Schalter (5b), der dritte Schalter (5c) und das Ventil (4) in dieser Reihenfolge in Reihe geschaltet.

Die vorliegende Offenbarung der Erfindung lehrt darüber hinaus eine der vorgenannten Schaltanordnungen mit einem zweiten Und-Glied (8b) und mit einer einstellbaren Strom- und/oder Spannungsversorgung (9),
wobei das zweite Und-Glied (8b) einen dritten Eingang umfasst;
wobei der Ausgang der einstellbaren Strom- und/oder Spannungsversorgung (9) mit dem dritten Eingang des zweiten Und-Gliedes (8b) galvanisch verbunden ist;
wobei das zweite Und-Glied (8b) ausgebildet ist, genau dann den dritten Schalter (5c) zu betätigen, wenn
am ersten Eingang des zweiten Und-Gliedes (8b) ein digitales AN-Signal anliegt und
am zweiten Eingang des zweiten Und-Gliedes (8b) ein digitales AN-Signal anliegt und
am dritten Eingang des zweiten Und-Gliedes (8b) ein digitales AN-Signal anliegt.

Wenn eine der Bedingungen, wonach
am ersten Eingang des zweiten Und-Gliedes (8b) ein digitales AN-Signal anliegt und
am zweiten Eingang des zweiten Und-Gliedes (8b) ein digitales AN-Signal anliegt und
am dritten Eingang des zweiten Und-Gliedes (8b) ein digitales AN-Signal anliegt,
nicht erfüllt ist, wird der dritte Schalter (5c) nicht bestätigt.

Die vorliegende Offenbarung der Erfindung lehrt ferner eine der vorgenannten Schaltanordnungen, wobei die Schaltanordnung zusätzlich umfasst:
einen vierten Positionsrückmelder (6d) und einen vierten Schalter (5d);
wobei der vierte Schalter (5d) mechanisch gekoppelt ist mit dem ersten Schalter (5a), sodass der vierte Schalter (5d) genau dann in einer geöffneten Stellung ist, wenn der erste Schalter (5a) in einer geöffneten Stellung ist, und der vierte Schalter (5d) genau dann in einer geschlossenen Stellung ist, wenn der erste Schalter (5a) in einer geschlossenen Stellung ist;
wobei der vierte Positionsrückmelder (6d) dem vierten Schalter (5d) zugeordnet ist und kommunikativ mit dem dritten Eingang der ersten Recheneinheit (1a) und mit dem dritten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
   je ein viertes Positionssignal vom vierten Positionsrückmelder (6d) zu lesen,
   das gelesene vierte Positionssignal der jeweils anderen Recheneinheit (1b, 1a) zu senden, sodass die jeweils andere Recheneinheit (1b, 1a) das gesendete vierte Positionssignal empfängt,
   das gelesene vierte Positionssignal mit dem empfangenen vierten Positionssignal zu vergleichen und
   bei fehlender Übereinstimmung des gelesenen vierten Positionssignales und des empfangenen vierten Positionssignales eine Fehlermeldung auszugeben.

Gemäss einem Aspekt der Erfindung umfasst der erste Schalter (5a) eine geöffnete Stellung und eine geschlossene Stellung. Ebenso umfasst der vierte Schalter (5d) eine geöffnete Stellung und eine geschlossene Stellung.

In einer Ausführungsform ist der vierte Schalter (5d) mechanisch direkt gekoppelt mit dem ersten Schalter (5a), sodass der vierte Schalter (5d) genau dann in einer geöffneten Stellung ist, wenn der erste Schalter (5a) in einer geöffneten Stellung ist, und der vierte Schalter (5d) genau dann in einer geschlossenen Stellung ist, wenn der erste Schalter (5a) in einer geschlossenen Stellung ist.

Der erste Schalter (5a) ist verschieden vom vierten Schalter (5d). Der zweite Schalter (5b) ist verschieden vom vierten Schalter (5d). Der dritte Schalter (5c) ist verschieden vom vierten Schalter (5d). Der erste Positionsrückmelder (6a) ist verschieden vom vierten Positionsrückmelder (6d). Der zweite Positionsrückmelder (6b) ist verschieden vom vierten Positionsrückmelder (6d). Der dritte Positionsrückmelder (6c) ist verschieden vom vierten Positionsrückmelder (6d).

Der vierte Positionsrückmelder (6d) ist vorzugsweise kommunikativ und unidirektional mit dem dritten Eingang der ersten Recheneinheit (1a) und mit dem dritten Eingang der zweiten Recheneinheit (1b) verbunden. Der vierte Positionsrückmelder (6d) sendet ein viertes Positionssignal an die erste Recheneinheit (1a) über den dritten Eingang der ersten Recheneinheit (1a) und an die zweite Recheneinheit (1b) über den dritten Eingang der zweiten Recheneinheit (1b). Die erste Recheneinheit (1a) sendet über den dritten Eingang der ersten Recheneinheit (1a) kein Signal und kein viertes Positionssignal an den vierten Positionsrückmelder (6d). Die zweite Recheneinheit (1b) sendet über den dritten Eingang der zweiten Recheneinheit (1b) kein Signal und kein viertes Positionssignal an den vierten Positionsrückmelder (6d).

Es ist vorgesehen, dass jede der Recheneinheiten (1a, 1b) ausgebildet ist, bei fehlender Übereinstimmung des gelesenen vierten Positionssignales und des empfangenen vierten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen vierten Positionssignales und des empfangenen vierten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen vierten Positionssignales und des empfangenen vierten Positionssignales eine Fehlermeldung auszugeben, indem anhand der jeweiligen Schnittstelle ein Fehlersignal an die übergeordnete Überwachungseinrichtung gesendet wird.

In einer Ausführungsform umfasst die Schaltanordnung ein Ventil (4). Der vierte Schalter (5d) und das Ventil (4) sind in Reihe geschaltet. Vorteilhaft sind der erste Schalter (5a), der zweite Schalter (5b), der dritte Schalter (5c), das Ventil (4) und der vierte Schalter (5d) in Reihe geschaltet. Besonders vorteilhaft sind der erste Schalter (5a), der zweite Schalter (5b), der dritte Schalter (5c), das Ventil (4) und der vierte Schalter (5d) in dieser Reihenfolge in Reihe geschaltet.

Die vorliegende Offenbarung der Erfindung lehrt darüber hinaus eine der vorgenannten Schaltanordnungen mit einem vierten Positionsrückmelder (6d),
wobei jede der Recheneinheiten (1a, 1b) ausgebildet ist:
das gelesene erste Positionssignal mit dem empfangenen vierten Positionssignal zu vergleichen und
bei fehlender Übereinstimmung des gelesenen ersten Positionssignales und des empfangenen vierten Positionssignales eine Fehlermeldung auszugeben.

Es ist vorgesehen, dass jede der Recheneinheiten (1a, 1b) ausgebildet ist, bei fehlender Übereinstimmung des gelesenen ersten Positionssignales und des empfangenen vierten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen ersten Positionssignales und des empfangenen vierten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen ersten Positionssignales und des empfangenen vierten Positionssignales eine Fehlermeldung auszugeben, indem anhand der jeweiligen Schnittstelle ein Fehlersignal an die übergeordnete Überwachungseinrichtung gesendet wird.

Die vorliegende Offenbarung der Erfindung lehrt weiterhin eine der vorgenannten Schaltanordnungen mit einem vierten Positionsrückmelder (6d),
wobei jede der Recheneinheiten (1a, 1b) ausgebildet ist:
das gelesene vierte Positionssignal mit dem empfangenen ersten Positionssignal zu vergleichen und
bei fehlender Übereinstimmung des gelesenen vierten Positionssignales und des empfangenen ersten Positionssignales eine Fehlermeldung auszugeben.

Es ist vorgesehen, dass jede der Recheneinheiten (1a, 1b) ausgebildet ist, bei fehlender Übereinstimmung des gelesenen vierten Positionssignales und des empfangenen ersten Positionssignales eine Fehlermeldung auszugeben, indem ein optisches und/oder akustisches Signal ausgegeben wird. Es ist weiterhin vorgesehen, dass jede der Recheneinheiten (1a, 1b) jeweils ein Fehlerregister umfasst und ausgebildet ist, bei fehlender Übereinstimmung des gelesenen vierten Positionssignales und des empfangenen ersten Positionssignales eine Fehlermeldung auszugeben, indem ein Wert im jeweiligen Fehlerregister gesetzt wird. Es ist ferner vorgesehen, dass jede der Recheneinheiten (1a, 1b) jeweils eine Schnittstelle zu einer übergeordneten Überwachungseinrichtung umfasst und ausgebildet ist, bei fehlender Übereinstimmung des gelesenen vierten Positionssignales und des empfangenen ersten Positionssignales eine Fehlermeldung auszugeben, indem anhand der jeweiligen Schnittstelle ein Fehlersignal an die übergeordnete Überwachungseinrichtung gesendet wird.

Die vorliegende Offenbarung der Erfindung lehrt ausserdem eine der vorgenannten Schaltanordnungen mit einem vierten Schalter (5d),
wobei die Schaltanordnung zusätzlich ein Ventil (4) umfasst;
wobei der erste Schalter (5a), das Ventil (4) und der vierte Schalter (5d) in Reihe geschaltet sind; und
wobei das Ventil (4) zwischen dem ersten Schalter (5a) und dem vierten Schalter (5d) angeordnet ist.

Vorzugsweise ist das Ventil (4) schaltungstechnisch zwischen dem ersten Schalter (5a) und dem vierten Schalter (5d) angeordnet. Vorteilhaft ist das Ventil (4) zwischen dem ersten Schalter (5a) und dem vierten Schalter (5d) in Reihe geschaltet.

Vorzugsweise ist das Ventil (4) schaltungstechnisch zwischen dem zweiten Schalter (5b) und dem vierten Schalter (5d) angeordnet. Vorteilhaft ist das Ventil (4) zwischen dem zweiten Schalter (5b) und dem vierten Schalter (5d) in Reihe geschaltet.

Die vorliegende Offenbarung der Erfindung lehrt weiterhin eine Schaltanordnung umfassend einen vierten Schalter (5d),
wobei die Schaltanordnung zusätzlich ein Ventil (4) umfasst;
wobei der dritte Schalter (5c), das Ventil (4) und der vierte Schalter (5d) in Reihe geschaltet sind; und
wobei das Ventil (4) zwischen dem dritten Schalter (5c) und dem vierten Schalter (5d) angeordnet ist.

Vorzugsweise ist das Ventil (4) schaltungstechnisch zwischen dem dritten Schalter (5c) und dem vierten Schalter (5d) angeordnet. Vorteilhaft ist das Ventil (4) zwischen dem dritten Schalter (5c) und dem vierten Schalter (5d) in Reihe geschaltet.

Die vorliegende Offenbarung der Erfindung lehrt weiterhin eine der vorgenannten Schaltanordnungen mit einem vierten Positionsrückmelder (6d),
wobei die Schaltanordnung mindestens einen Rückmeldewiderstand (12) umfasst; und
wobei der vierte Positionsrückmelder (6d) galvanisch mit dem mindestens einen einem Rückmeldewiderstand (12) verbunden ist.

Vorteilhaft umfasst der erste Schalter (5a) einen Kontakt. Der mindestens eine Rückmeldewiderstand (12) ist mit dem Kontakt des ersten Schalters galvanisch verbunden. Vorzugsweise umfasst die Schaltanordnung eine Strom- und/oder Spannungsversorgung des Ventils (10). Dabei sind der Kontakt des ersten Schalters (5a) und der mindestens eine Rückmeldewiderstand (12) beide galvanisch mit der Strom- und/oder Spannungsversorgung des Ventils (10) verbunden.

Die vorliegende Offenbarung der Erfindung lehrt ferner eine der vorgenannten Schaltanordnungen mit einem vierten Positionsrückmelder (6d),
wobei die Schaltanordnung mindestens einen Parallelwiderstand (13) und mindestens eine Diode (19) umfasst;
wobei der mindestens eine Parallelwiderstand (13) parallel zum vierten Schalter (5d, 5e) geschaltet ist;
wobei der mindestens eine Parallelwiderstand (13) einen ersten Kontakt umfasst und der vierte Schalter (5d, 5e) einen ersten Kontakt umfasst;
wobei der erste Kontakt des mindestens einen Parallelwiderstandes (13) galvanisch verbunden ist mit dem ersten Kontakt des vierten Schalters (5d, 5e); und
wobei der erste Kontakt über die mindestens eine Diode (19) mit dem dritten Eingang der ersten Recheneinheit (1a) verbunden ist.

Vorteilhaft umfasst der mindestens eine Parallelwiderstand (13) einen zweiten Kontakt und der vierte Schalter (5d, 5e) umfasst einen zweiten Kontakt. Dabei ist der zweite Kontakt des mindestens einen Parallelwiderstandes (13) galvanisch verbunden mit dem zweiten Kontakt des vierten Schalters (5d, 5e). In einer Ausführungsform umfasst die Schaltanordnung eine Erdung und/oder einen Masseanschluss (11). Der zweite Kontakt des mindestens einen Parallelwiderstandes (13) ist galvanisch verbunden mit der Erdung und/oder mit dem Massenanschluss (11).

Das Genannte bezieht sich auf einzelne Ausführungsformen der Erfindung. Verschiedene Anderungen an den Ausführungsformen können vorgenommen werden, ohne von der zu Grunde liegenden Idee abzuweichen und ohne den Rahmen dieser Offenbarung zu verlassen. Der Gegenstand der vorliegenden Erfindung ist definiert über deren Ansprüche. Es können verschiedenste Änderungen vorgenommen werden, ohne den Schutzbereich der folgenden Ansprüche zu verlassen.

### Bezugszeichenliste

- 1a - 1c: Recheneinheiten
- 2: Kommunikationsbus
- 3: Strom- und/oder Spannungshauptversorgung
- 4: Ventil
- 5a - 5e: Schalter
- 6a - 6d: Positionsrückmelder
- 7: Oder-Glied
- 8a, 8b: Und-Glieder
- 9: einstellbare Strom- und/oder Spannungsversorgung
- 10: Strom- und/oder Spannungsversorgung des Ventils
- 11: Erde und/oder Massenanschluss
- 12: Rückmeldewiderstand
- 13: Parallelwiderstand
- 14: Verbraucher
- 15a, 15b: Versorgungspannungen
- 16a, 16b: Versorgungsspannungen
- 17: Widerstand
- 18a, 18b: Knotenpunkte
- 19: Diode
- 20, 21: Widerstände
- 22: Knotenpunkt
- 23: Widerstand

## Patentansprüche

1. Schaltanordnung umfassend:
eine erste und eine zweite Recheneinheit (1a, 1b) jeweils umfassend einen ersten Eingang;
ein Oder-Glied (7), einen ersten Positionsrückmelder (6a) und einen ersten Schalter (5a), wobei das Oder-Glied (7) einen Ausgang aufweist und über den Ausgang des Oder-Gliedes (7) kommunikativ mit dem ersten Schalter (5a) verbunden ist;
wobei das Oder-Glied (7) einen ersten und einen zweiten Eingang aufweist und die erste Recheneinheit (1a) mit dem Oder-Glied (7) über den ersten Eingang des Oder-Gliedes (7) kommunikativ verbunden ist und die zweite Recheneinheit (1b) mit dem Oder-Glied (7) über den zweiten Eingang des Oder-Gliedes (7) kommunikativ verbunden ist;
wobei mindestens eine der Recheneinheiten (1a, 1b) ausgebildet ist, ein digitales AN-Signal an das Oder-Glied (7) zu senden, und das Oder-Glied (7) ausgebildet ist, bei Empfang des digitalen AN-Signales den ersten Schalter (5a) zu betätigen;
wobei der erste Positionsrückmelder (6a) dem ersten Schalter (5a) zugeordnet ist und kommunikativ mit dem ersten Eingang der ersten Recheneinheit (1a) und mit dem ersten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
ein erstes Positionssignal vom ersten Positionsrückmelder (6a) zu lesen,
das gelesene erste Positionssignal der jeweils anderen Recheneinheit (1b, 1a) zu senden, sodass die jeweils andere Recheneinheit (1b, 1a) das gesendete erste Positionssignal empfängt,
das gelesene erste Positionssignal mit dem empfangenen ersten Positionssignal zu vergleichen und
bei fehlender Übereinstimmung des gelesenen ersten Positionssignales und des empfangenen ersten Positionssignales eine Fehlermeldung auszugeben.

2. Die Schaltanordnung gemäss Anspruch 1,
wobei jede der Recheneinheiten (1a, 1b) ausgebildet ist, ein digitales AN-Signal an das Oder-Glied (7) zu senden;
wobei das Oder-Glied (7) ausgebildet ist, bei Empfang mindestens eines digitalen AN-Signales den ersten Schalter (5a) zu betätigen;
wobei jede der Recheneinheiten (1a, 1b) ausgebildet ist:
nach dem Versenden des digitalen AN-Signales ein erstes Positionssignal vom ersten Positionsrückmelder (6a) zu lesen,
das gelesene erste Positionssignal der jeweils anderen Recheneinheit (1b, 1a) zu senden, sodass die jeweils andere Recheneinheit (1b, 1a) das gesendete erste Positionssignal empfängt,
das gelesene erste Positionssignal mit dem empfangenen ersten Positionssignal zu vergleichen und
bei fehlender Übereinstimmung des gelesenen ersten Positionssignales und des empfangenen ersten Positionssignales eine Fehlermeldung auszugeben.

3. Die Schaltanordnung gemäss Anspruch 1,
wobei die Recheneinheiten (1a, 1b) untereinander kommunikativ verbunden sind und die erste Recheneinheiten (1a) ausgebildet ist:
ein digitales AN-Signal an das Oder-Glied (7) zu senden und
infolge des Versendens des digitalen AN-Signales an das Oder-Glied (7) der zweiten Recheneinheit (1b) ein Hinweissignal zu senden;
wobei jede der Recheneinheiten (1a, 1b) ausgebildet ist:
nach dem Versenden des digitalen AN-Signales ein erstes Positionssignal vom ersten Positionsrückmelder (6a) zu lesen,
das gelesene erste Positionssignal der jeweils anderen Recheneinheit (1b, 1a) zu senden, sodass die jeweils andere Recheneinheit (1b, 1a) das gesendete erste Positionssignal empfängt,
das gelesene erste Positionssignal mit dem empfangenen ersten Positionssignal zu vergleichen und
bei fehlender Übereinstimmung des gelesenen ersten Positionssignales und des empfangenen ersten Positionssignales eine Fehlermeldung auszugeben.

4. Die Schaltanordnung gemäss einem der Ansprüche 1 bis 3,
wobei die Schaltanordnung zusätzlich eine Strom- und/oder Spannungshauptversorgung (3) umfasst;
wobei die erste Recheneinheit (1a) ein Fehlerregister und einen Versorgungseingang aufweist;
wobei die Strom- und/oder Spannungshauptversorgung (3) mit dem Versorgungseingang der ersten Recheneinheit (1a) galvanisch verbunden ist;
wobei die erste Recheneinheit (1a) eine Einheit zur zeitlichen Überwachung eines Versorgungssignales am Versorgungseingang der ersten Recheneinheit (1a) aufweist; und
wobei die Einheit zur zeitlichen Überwachung des Versorgungssignales ausgebildet ist, einen Wert im Fehlerregister zu setzen, wenn das Versorgungssignal einen vorgegebenen Wert unterschreitet.

5. Die Schaltanordnung gemäss einem der Ansprüche 1 bis 4,
wobei die erste Recheneinheit (1a) zusätzlich einen zweiten Eingang umfasst und die zweite Recheneinheit (1b) zusätzlich einen zweiten Eingang umfasst; wobei die Schaltanordnung zusätzlich umfasst:
ein erstes Und-Glied (8a), einen zweiten Positionsrückmelder (6b) und einen zweiten Schalter (5b), wobei das erste Und-Glied (8a) einen Ausgang aufweist und über den Ausgang des ersten Und-Gliedes (8a) kommunikativ mit dem zweiten Schalter (5b) verbunden ist;
wobei das erste Und-Glied (8a) einen ersten und einen zweiten Eingang aufweist und die erste Recheneinheit (1a) mit dem ersten Und-Glied (8a) über den ersten Eingang des ersten Und-Gliedes (8a) kommunikativ verbunden ist und die zweite Recheneinheit (1b) mit dem ersten Und-Glied (8a) über den zweiten Eingang des ersten Und-Glied (8a) kommunikativ verbunden ist;
wobei jede der Recheneinheiten (1a, 1b) ausgebildet ist, ein digitales AN-Signal an das erste Und-Glied (8a) zu senden, und das erste Und-Glied (8a) ausgebildet ist, ausschliesslich bei Empfang beider digitaler AN-Signale den zweiten Schalter (5b) zu betätigen;
wobei der zweite Positionsrückmelder (6b) dem zweiten Schalter (5b) zugeordnet ist und kommunikativ mit dem zweiten Eingang der ersten Recheneinheit (1a) und mit dem zweiten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
je ein zweites Positionssignal vom zweiten Positionsrückmelder (6b) zu lesen,
das gelesene zweite Positionssignal der jeweils anderen Recheneinheit (1b, 1a) zu senden, sodass die jeweils andere Recheneinheit (1b, 1a) das gesendete zweite Positionssignal empfängt,
das gelesene zweite Positionssignal mit dem empfangenen zweiten Positionssignal zu vergleichen und
bei fehlender Übereinstimmung des gelesenen zweiten Positionssignales und des empfangenen zweiten Positionssignales eine Fehlermeldung auszugeben.

6. Die Schaltanordnung gemäss einem der Ansprüche 1 bis 5, wobei die Schaltanordnung zusätzlich umfasst:
eine einstellbare Strom- und/oder Spannungsversorgung (9);
wobei die einstellbare Strom- und/oder Spannungsversorgung (9) einen Ausgang und einen Freigabeeingang umfasst und die erste Recheneinheit (1a) einen Freigabeausgang umfasst;
wobei die erste Recheneinheit (1a) über den Freigabeausgang der ersten Recheneinheit (1a) und über den Freigabeeingang der einstellbaren Strom- und/oder Spannungsversorgung (9) mit der einstellbaren Strom- und/oder Spannungsversorgung (9) kommunikativ verbunden ist;
wobei die erste Recheneinheit (1a) ausgebildet ist, ein Freigabesignal an die einstellbare Strom- und/oder Spannungsversorgung (9) zu senden; und
wobei die einstellbare Strom- und/oder Spannungsversorgung (9) ausgebildet ist, als Antwort auf einen Empfang des Freigabesignales ein digitales AN-Signal an ihrem Ausgang bereitzustellen.

7. Die Schaltanordnung gemäss den Ansprüchen 5 und 6,
wobei das erste Und-Glied (8a) einen dritten Eingang umfasst;
wobei der Ausgang der einstellbaren Strom- und/oder Spannungsversorgung (9) mit dem dritten Eingang des ersten Und-Gliedes (8a) galvanisch verbunden ist;
wobei das erste Und-Glied (8a) ausgebildet ist, genau dann den zweiten Schalter (5b) zu betätigen, wenn
am ersten Eingang des ersten Und-Gliedes (8a) ein digitales AN-Signal anliegt und
am zweiten Eingang des ersten Und-Gliedes (8a) ein digitales AN-Signal anliegt und
am dritten Eingang des ersten Und-Gliedes (8a) ein digitales AN-Signal anliegt.

8. Die Schaltanordnung gemäss einem der Ansprüche 1 bis 7,
wobei die erste Recheneinheit (1a) zusätzlich einen dritten Eingang umfasst und die zweite Recheneinheit (1b) zusätzlich einen dritten Eingang umfasst; wobei die Schaltanordnung zusätzlich umfasst:
ein zweites Und-Glied (8b), einen dritten Positionsrückmelder (6c) und einen dritten Schalter (5c), wobei das zweite Und-Glied (8b) einen Ausgang aufweist und über den Ausgang des zweiten Und-Gliedes (8b) kommunikativ mit dem dritten Schalter (5c) verbunden ist;
wobei das zweite Und-Glied (8b) einen ersten und einen zweiten Eingang aufweist und die erste Recheneinheit (1a) mit dem zweiten Und-Glied (8b) über den ersten Eingang des zweiten Und-Gliedes (8b) kommunikativ verbunden ist und die zweite Recheneinheit (1b) mit dem zweiten Und-Glied (8b) über den zweiten Eingang des zweiten Und-Glied (8b) kommunikativ verbunden ist;
wobei jede der Recheneinheiten (1a, 1b) ausgebildet ist, ein digitales AN-Signal an das zweite Und-Glied (8b) zu senden, und das zweite Und-Glied (8b) ausgebildet ist, ausschliesslich bei Empfang beider digitaler AN-Signale den dritten Schalter (5c) zu betätigen;
wobei der dritte Positionsrückmelder (6c) dem dritten Schalter (5c) zugeordnet ist und kommunikativ mit dem dritten Eingang der ersten Recheneinheit (1a) und mit dem dritten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
je ein drittes Positionssignal vom dritten Positionsrückmelder (6c) zu lesen,
das gelesene dritte Positionssignal der jeweils anderen Recheneinheit (1b, 1a) zu senden, sodass die jeweils andere Recheneinheit (1b, 1a) das gesendete dritte Positionssignal empfängt,
das gelesene dritte Positionssignal mit dem empfangenen dritten Positionssignal zu vergleichen und
bei fehlender Übereinstimmung des gelesenen dritten Positionssignales und des empfangenen dritten Positionssignales eine Fehlermeldung auszugeben.

9. Die Schaltanordnung gemäss den Ansprüchen 6 und 8,
wobei das zweite Und-Glied (8b) einen dritten Eingang umfasst;
wobei der Ausgang der einstellbaren Strom- und/oder Spannungsversorgung (9) mit dem dritten Eingang des zweiten Und-Gliedes (8b) galvanisch verbunden ist;
wobei das zweite Und-Glied (8b) ausgebildet ist, genau dann den dritten Schalter (5c) zu betätigen, wenn
am ersten Eingang des zweiten Und-Gliedes (8b) ein digitales AN-Signal anliegt und
am zweiten Eingang des zweiten Und-Gliedes (8b) ein digitales AN-Signal anliegt und
am dritten Eingang des zweiten Und-Gliedes (8b) ein digitales AN-Signal anliegt.

10. Die Schaltanordnung gemäss einem der Ansprüche 1 bis 9, wobei die Schaltanordnung zusätzlich umfasst:
einen vierten Positionsrückmelder (6d) und einen vierten Schalter (5d);
wobei der vierte Schalter (5d) mechanisch gekoppelt ist mit dem ersten Schalter (5a), sodass der vierte Schalter (5d) genau dann in einer geöffneten Stellung ist, wenn der erste Schalter (5a) in einer geöffneten Stellung ist, und der vierte Schalter (5d) genau dann in einer geschlossenen Stellung ist, wenn der erste Schalter (5a) in einer geschlossenen Stellung ist;
wobei der vierte Positionsrückmelder (6d) dem vierten Schalter (5d) zugeordnet ist und kommunikativ mit dem dritten Eingang der ersten Recheneinheit (1a) und mit dem dritten Eingang der zweiten Recheneinheit (1b) verbunden ist;
wobei die Recheneinheiten (1a, 1b) untereinander kommunikativ verbunden sind und jede der Recheneinheiten (1a, 1b) ausgebildet ist:
je ein viertes Positionssignal vom vierten Positionsrückmelder (6d) zu lesen,
das gelesene vierte Positionssignal der jeweils anderen Recheneinheit (1b, 1a) zu senden, sodass die jeweils andere Recheneinheit (1b, 1a) das gesendete vierte Positionssignal empfängt,
das gelesene vierte Positionssignal mit dem empfangenen vierten Positionssignal zu vergleichen und
bei fehlender Übereinstimmung des gelesenen vierten Positionssignales und des empfangenen vierten Positionssignales eine Fehlermeldung auszugeben.

11. Die Schaltanordnung gemäss Anspruch 10,
wobei jede der Recheneinheiten (1a, 1b) ausgebildet ist:
das gelesene erste Positionssignal mit dem empfangenen vierten Positionssignal zu vergleichen und
bei fehlender Übereinstimmung des gelesenen ersten Positionssignales und des empfangenen vierten Positionssignales eine Fehlermeldung auszugeben.

12. Die Schaltanordnung gemäss Anspruch 10,
wobei jede der Recheneinheiten (1a, 1b) ausgebildet ist:
das gelesene vierte Positionssignal mit dem empfangenen ersten Positionssignal zu vergleichen und
bei fehlender Übereinstimmung des gelesenen vierten Positionssignales und des empfangenen ersten Positionssignales eine Fehlermeldung auszugeben.

13. Die Schaltanordnung gemäss einem der Ansprüche 10 bis 12,
wobei die Schaltanordnung zusätzlich ein Ventil (4) umfasst;
wobei der erste Schalter (5a), das Ventil (4) und der vierte Schalter (5d) in Reihe geschaltet sind; und
wobei das Ventil (4) zwischen dem ersten Schalter (5a) und dem vierten Schalter (5d) angeordnet ist.

14. Die Schaltanordnung gemäss einem der Ansprüche 10 bis 13,
wobei die Schaltanordnung mindestens einen Rückmeldewiderstand (12) umfasst;
wobei der vierte Positionsrückmelder (6d) galvanisch mit dem mindestens einen Rückmeldewiderstand (12) verbunden ist.

15. Die Schaltanordnung gemäss einem der Ansprüche 10 bis 14,
wobei die Schaltanordnung mindestens einen Parallelwiderstand (13) und mindestens eine Diode (19) umfasst;
wobei der mindestens eine Parallelwiderstand (13) parallel zum vierten Schalter (5d, 5e) geschaltet ist;
wobei der mindestens eine Parallelwiderstand (13) einen ersten Kontakt umfasst und der vierte Schalter (5d, 5e) einen ersten Kontakt umfasst;
wobei der erste Kontakt des mindestens einen Parallelwiderstandes (13) galvanisch verbunden ist mit dem ersten Kontakt des vierten Schalters (5d, 5e); und
wobei der erste Kontakt über die mindestens eine Diode (19) mit dem dritten Eingang der ersten Recheneinheit (1a) verbunden ist.

## Claims

1. A switching arrangement, comprising:
a first and a second processing unit (1a, 1b) each comprising a first input;
an OR gate (7), a first position feedback device (6a) and a first switch (5a), wherein the OR gate (7) has an output and is in operative communication with the first switch (5a) via the output of the OR gate (7);wherein the OR gate (7) has a first input and
a second input, and the first processing unit (1a) is in operative communication with the OR gate (7) via the first input of the OR gate (7), and the second processing unit (1b) is in operative communication with the OR gate (7) via the second input of the OR gate (7);
wherein at least one of the processing units (1a, 1b) is configured to send a digital ON signal to the OR gate (7), and
the OR gate (7) is configured to actuate the first switch (5a) on receiving the digital ON signal;
wherein the first position feedback device (6a) is associated with the first switch (5a) and is in operative communication with the first input of the first processing unit (1a) and with the first input of the second processing unit (1b);
wherein the processing units (1a, 1b) are communicatively interconnected, and each of the processing units (1a, 1b) is configured to:
read a first position signal from the first position feedback device (6a);
send the read first position signal to the other processing unit (1b, 1a) so that the other processing unit (1b, 1a) receives the sent first position signal;
compare the read first position signal with the received first position signal; and
output an error message if the read first position signal is different fromis different from the received first position signal.

2. The switching arrangement as claimed in claim 1,
wherein each of the processing units (1a, 1b) is configured to send a digital ON signal to the OR gate (7),
wherein the OR gate (7) is configured to actuate the first switch (5a) on receiving at least one digital ON signal;
wherein each of the processing units (1a, 1b) is configured to:
read a first position signal from the first position feedback device (6a) after sending the digital ON signal;
send the read first position signal to the other processing unit (1b, 1a) so that the other processing unit (1b, 1a) receives the sent first position signal;
compare the read first position signal with the received first position signal; and
output an error message if the read first position signal is different from the received first position signal.

3. The switching arrangement as claimed in claim 1,
wherein the processing units (1a, 1b) are communicatively interconnected, and the first processing unit (1a) is configured to:
send a digital ON signal to the OR gate (7); and
in consequence of sending the digital ON signal to the OR gate (7), to send a notification signal to the second processing unit (1b) ;
wherein each of the processing units (1a, 1b) is configured to:
read a first position signal from the first position feedback device (6a) after sending the digital ON signal;
send the read first position signal to the other processing unit (1b, 1a) so that the other processing unit (1b, 1a) receives the sent first position signal;
compare the read first position signal with the received first position signal; and
output an error message if the read first position signal is different from the received first position signal.

4. The switching arrangement as claimed in any of claims 1 to 3,
wherein the switching arrangement additionally comprises a current and/or voltage supply (3);
wherein the first processing unit (1a) comprises an error register and a supply input;
wherein the current and/or voltage supply (3) is galvanically connected to the supply input of the first processing unit (1a), wherein the first processing unit (1a) comprises a unit for monitoring over time a supply signal at the supply input of the first processing unit (1a); and
wherein the unit for monitoring over time the supply signal is configured to set a value in the error register if the supply signal falls below a specified value.

5. The switching arrangement as claimed in any of claims 1 to 4, wherein the first processing unit (1a) additionally comprises a second input, and the second processing unit (1b) additionally comprises a second input;
wherein the switching arrangement additionally comprises a first AND gate (8a), a second position feedback device (6b) and a second switch (5b), wherein the first AND gate (8a) has an output and is in operative communication with the second switch (5b) via the output of the first AND gate (8a);
wherein the first AND gate (8a) has a first input and a second input, and the first processing unit (1a) is in operative communication with the first AND gate (8a) via the first input of the first AND gate (8a), and the second processing unit (1b) is in operative communication with the first AND gate (8a) via the second input of the first AND gate (8a);
wherein each of the processing units (1a, 1b) is configured to send a digital ON signal to the first AND gate (8a), and the first AND gate (8a) is configured to actuate the second switch (5b) solely on receiving both digital ON signals;
wherein the second position feedback device (6b) is associated with the second switch (5b) and is in operative communication with the second input of the first processing unit (1a) and with the second input of the second processing unit (1b);
wherein the processing units (1a, 1b) are communicatively interconnected, and each of the processing units (1a, 1b) is configured to:
read a second position signal from the second position feedback device (6b);
send the read second position signal to the other processing unit (1b, 1a) so that the other processing unit (1b, 1a) receives the sent second position signal;
compare the read second position signal with the received second position signal; and
output an error message if the read second position signal is different from the received second position signal.

6. The switching arrangement as claimed in any of claims 1 to 5, which switching arrangement additionally comprises:
an adjustable current and/or voltage supply (9);
wherein the adjustable current and/or voltage supply (9) comprises an output and an enable input, and the first processing unit (1a) comprises an enable output;
wherein the first processing unit (1a) is in operative communication with the adjustable current and/or voltage supply (9) via the enable output of the first processing unit (1a) and via the enable input of the adjustable current and/or voltage supply (9);
wherein the first processing unit (1a) is configured to send an enable signal to the adjustable current and/or voltage supply (9); and
wherein the adjustable current and/or voltage supply (9) is configured to provide a digital ON signal at its output in response to receiving the enable signal.

7. The switching arrangement as claimed in claims 5 and 6, wherein the first AND gate (8a) comprises a third input, wherein the output of the adjustable current and/or voltage supply (9) is galvanically connected to the third input of the first AND gate (8a);
wherein the first AND gate (8a) is configured to actuate the second switch (5b) if, and only if,
a digital ON signal is present at the first input of the first AND gate (8a), and
a digital ON signal is present at the second input of the first AND gate (8a), and
a digital ON signal is present at the third input of the first AND gate (8a).

8. The switching arrangement as claimed in any of claims 1 to 7, wherein the first processing unit (1a) additionally comprises a third input, and the second processing unit (1b) additionally comprises a third input;
wherein the switching arrangement additionally comprises a second AND gate (8b), a third position feedback device (6c) and a third switch (5c), wherein the second AND gate (8b) has an output and is in operative communication with the third switch (5c) via the output of the second AND gate (8b),
wherein the second AND gate (8b) has a first input and a second input, and the first processing unit (1a) is in operative communication with the second AND gate (8b) via the first input of the second AND gate (8b), and the second processing unit (1b) is in operative communication with the second AND gate (8b) via the second input of the second AND gate (8b),
wherein each of the processing units (1a, 1b) is configured to send a digital ON signal to the second AND gate (8b), and the second AND gate (8b) is configured to actuate the third switch (5c) solely on receiving both digital ON signals,
wherein the third position feedback device (6c) is associated with the third switch (5c) and is in operative communication with the third input of the first processing unit (1a) and with the third input of the second processing unit (1b),
wherein the processing units (1a, 1b) are communicatively interconnected, and each of the processing units (1a, 1b) is configured to:
read a third position signal from the third position feedback device (6c);
send the read third position signal to the other processing unit (1b, 1a) so that the other processing unit (1b, 1a) receives the sent third position signal;
compare the read third position signal with the received third position signal; and
output an error message if the read third position signal is different from the received third position signal.

9. The switching arrangement as claimed in claims 6 and 8, wherein the second AND gate (8b) comprises a third input;
wherein the output of the adjustable current and/or voltage supply (9) is galvanically connected to the third input of the second AND gate (8b);
wherein the second AND gate (8b) is configured to actuate the third switch (5c) if, and only if,
a digital ON signal is present at the first input of the second AND gate (8b), and
a digital ON signal is present at the second input of the second AND gate (8b), and
a digital ON signal is present at the third input of the second AND gate (8b).

10. The switching arrangement as claimed in any of claims 1 to 9,
wherein the switching arrangement additionally comprises a fourth position feedback device (6d) and a fourth switch (5d); wherein the fourth switch (5d) is mechanically coupled to the first switch (5a) so that the fourth switch (5d) is in an open position if, and only if, the first switch (5a) is in an open position, and the fourth switch (5d) is in a closed position if, and only if, the first switch (5a) is in a closed position; wherein the fourth position feedback device (6d) is associated with the fourth switch (5d) and is in operative communication with the third input of the first processing unit (1a) and with the third input of the second processing unit (1b);
wherein the processing units (1a, 1b) are communicatively interconnected, and each of the processing units (1a, 1b) is configured to:
read a fourth position signal from the fourth position feedback device (6d);
send the read fourth position signal to the other processing unit (1b, 1a) so that the other processing unit (1b, 1a) receives the sent fourth position signal;
compare the read fourth position signal with the received fourth position signal; and
output an error message if the read fourth position signal is different from the received fourth position signal.

11. The switching arrangement as claimed in claim 10,
wherein each of the processing units (1a, 1b) is configured to:
compare the read first position signal with the received fourth position signal; and
output an error message if the read first position signal is different from the received fourth position signal.

12. The switching arrangement as claimed in claim 10,
wherein each of the processing units (1a, 1b) is configured to:
compare the read fourth position signal with the received first position signal; and
output an error message if the read fourth position signal is different from the received first position signal.

13. The switching arrangement as claimed in any of claims 10 to 12,
wherein the switching arrangement additionally comprises a valve (4) ;
wherein the first switch (5a), the valve (4) and the fourth switch (5d) are connected in series; and
wherein the valve (4) is arranged between the first switch (5a) and the fourth switch (5d).

14. The switching arrangement as claimed in any of claims 10 to 13,
wherein the switching arrangement comprises at least one feedback resistor (12);
wherein the fourth position feedback device (6d) is galvanically connected to the at least one feedback resistor (12).

15. The switching arrangement as claimed in any of claims 10 to 14,
wherein the switching arrangement comprises at least one parallel resistor (13) and at least one diode (19);
wherein the at least one parallel resistor (13) is connected in parallel with the fourth switch (5d, 5e);
wherein the at least one parallel resistor (13) comprises a first contact, and the fourth switch (5d, 5e) comprises a first contact;
wherein the first contact of the at least one parallel resistor (13) is galvanically connected to the first contact of the fourth switch (5d, 5e); and
wherein the first contact is connected via the at least one diode (19) to the third input of the first processing unit (1a).

## Revendications

1. Dispositif de commutation comprenant :
des première et seconde unités de calcul (1a, 1b) comprenant respectivement une première entrée ;
un élément OU (7), un premier indicateur de position (6a) et un premier commutateur (5a), dans lequel l'élément OU (7) présente une sortie et est relié en communication au premier commutateur (5a) par l'intermédiaire de la sortie de l'élément OU (7);
dans lequel l'élément OU (7) présente des première et deuxième entrées et la première unité de calcul (1a) est reliée en communication à l'élément OU (7) par l'intermédiaire de la première entrée de l'élément OU (7) et la seconde unité de calcul (1b) est reliée en communication à l'élément OU (7) par l'intermédiaire de la deuxième entrée de l'élément OU (7);
dans lequel au moins une des unités de calcul (1a, 1b) est conçue pour envoyer un signal de mise en fonction numérique à l'élément OU (7), et l'élément OU (7) est conçu pour actionner le premier commutateur (5a) à réception du signal de mise en fonction numérique ;
dans lequel le premier indicateur de position (6a) est associé au premier commutateur (5a) et est relié en communication à la première entrée de la première unité de calcul (1a) et à la première entrée de la seconde unité de calcul (1b);
dans lequel les unités de calcul (1a, 1b) sont reliées en communication les unes aux autres et chacune des unités de calcul (1a, 1b) est conçue pour :
lire un premier signal de position provenant du premier indicateur de position (6a),
transmettre le premier signal de position lu de l'autre unité de calcul (1b, 1a) respective de sorte que l'autre unité de calcul (1b, 1a) respective reçoive le premier signal de position transmis,
comparer le premier signal de position lu avec le premier signal de position reçu, et
émettre un message d'erreur si le premier signal de position lu et le premier signal de position reçu ne correspondent pas.

2. Le dispositif de commutation selon la revendication 1,
dans lequel chacune des unités de calcul (1a, 1b) est conçue pour envoyer un signal numérique de mise en fonction à l'élément OU (7);
dans lequel l'élément OU (7) est conçu pour actionner le premier commutateur (5a) à réception d'au moins un signal numérique de mise en fonction;
dans lequel chacune des unités de calcul (1a, 1b) est conçue pour:
lire un premier signal de position provenant du premier indicateur de position (6a) après la transmission du signal numérique de mise en fonction,
transmettre le premier signal de position lu de l'autre unité de calcul (1b, 1a) respective de sorte que l'autre unité de calcul (1b, 1a) respective reçoive le premier signal de position transmis,
comparer le premier signal de position lu avec le premier signal de position reçu, et
émettre un message d'erreur si le premier signal de position lu et le premier signal de position reçu ne correspondent pas.

3. Le dispositif de commutation selon la revendication 1,
dans lequel les unités de calcul (1a, 1b) sont reliées en communication les unes aux autres et la première unité de calcul (1a) est conçue pour :
envoyer un signal numérique de mise en fonction à l'élément OU (7), et
envoyer un signal d'information suite à la transmission du signal numérique de mise en fonction à l'élément OU (7) de la seconde unité de calcul (1b);
dans lequel chacune des unités de calcul (1a, 1b) est conçue pour:
lire un premier signal de position provenant du premier indicateur de position (6a) après la transmission du signal numérique de mise en fonction,
transmettre le premier signal de position lu de l'autre unité de calcul (1b, 1a) respective de sorte que l'autre unité de calcul (1b, 1a) respective reçoive le premier signal de position transmis,
comparer le premier signal de position lu avec le premier signal de position reçu, et
émettre un message d'erreur si le premier signal de position lu et le premier signal de position reçu ne correspondent pas.

4. Le dispositif de commutation selon l'une quelconque des revendications 1 à 3,
dans lequel le dispositif de commutation comprend en outre une alimentation principale en courant et/ou en tension (3);
dans lequel la première unité de calcul (1a) comprend un registre d'erreur et une entrée d'alimentation;
dans lequel l'alimentation principale en courant et/ou en tension (3) est reliée de manière galvanique à l'entrée d'alimentation de la première unité de calcul (1a);
dans lequel la première unité de calcul (1a) présente une unité permettant une surveillance temporelle d'un signal d'alimentation au niveau de l'entrée d'alimentation de la première unité de calcul (1a); et
dans lequel l'unité permettant une surveillance temporelle du signal d'alimentation est conçue pour placer une valeur dans le registre d'erreur si le signal d'alimentation descend en dessous d'une valeur prédéfinie.

5. Le dispositif de commutation selon l'une quelconque des revendications 1 à 4,
dans lequel la première unité de calcul (1a) comprend en outre une deuxième entrée et la seconde unité de calcul (1b) comprend en outre une deuxième entrée;
dans lequel le dispositif de commutation comprend en outre:
un premier élément ET (8a), un deuxième indicateur de position (6b) et un deuxième commutateur (5b), dans lequel le premier élément ET (8a) présente une sortie et est relié en communication au deuxième commutateur (5b) par l'intermédiaire de la sortie du premier élément ET (8a);
dans lequel le premier élément ET (8a) présente des première et deuxième entrées et la première unité de calcul (1a) est reliée en communication au premier élément ET (8a) par l'intermédiaire de la première entrée du premier élément ET (8a) et la seconde unité de calcul (1b) est reliée en communication au premier élément ET (8a) par l'intermédiaire de la deuxième entrée du premier élément ET (8a);
dans lequel chacune des unités de calcul (1a, 1b) est conçue pour envoyer un signal numérique de mise en fonction au premier élément ET (8a), et le premier élément ET (8a) est conçu pour actionner le deuxième commutateur (5b) uniquement à réception des deux signaux numériques de mise en fonction;
dans lequel le deuxième indicateur de position (6b) est associé au deuxième commutateur (5b) et est relié en communication à la deuxième entrée de la première unité de calcul (1a) et à la deuxième entrée de la seconde unité de calcul (1b);
dans lequel les unités de calcul (1a, 1b) sont reliées en communication les unes aux autres et chacune des unités de calcul (1a, 1b) est conçue pour :
lire un deuxième signal de position provenant du deuxième indicateur de position (6b),
transmettre le deuxième signal de position lu de l'autre unité de calcul (1b, 1a) respective de sorte que l'autre unité de calcul (1b, 1a) respective reçoive le deuxième signal de position transmis,
comparer le deuxième signal de position lu avec le deuxième signal de position reçu, et
émettre un message d'erreur si le deuxième signal de position lu et le deuxième signal de position reçu ne correspondent pas.

6. Le dispositif de commutation selon l'une quelconque des revendications 1 à 5,
dans lequel le dispositif de commutation comprend en outre :
une alimentation en courant et/ou en tension réglable (9);
dans lequel l'alimentation en courant et/ou en tension réglable (9) comprend une sortie et une entrée de validation, et la première unité de calcul (1a) comprend une sortie de validation;
dans lequel la première unité de calcul (1a) est reliée en communication à l'alimentation en courant et/ou en tension réglable (9) par l'intermédiaire de la sortie de validation de la première unité de calcul (1a) et par l'intermédiaire de l'entrée de validation de l'alimentation en courant et/ou en tension réglable (9);
dans lequel la première unité de calcul (1a) est conçue pour envoyer un signal de validation à l'alimentation en courant et/ou en tension réglable (9); et
dans lequel l'alimentation en courant et/ou en tension réglable (9) est conçue pour fournir un signal numérique de mise en fonction au niveau de sa sortie en réponse à la réception du signal de validation.

7. Le dispositif de commutation selon les revendications 5 et 6,
dans lequel le premier élément ET (8a) comprend une troisième entrée;
dans lequel la sortie de l'alimentation en courant et/ou en tension réglable (9) est reliée de manière galvanique à la troisième entrée du premier élément ET (8a);
dans lequel le premier élément ET (8a) est conçu pour n'actionner ensuite le deuxième commutateur (5b) que si :
un signal numérique de mise en fonction est présent au niveau de la première entrée du premier élément ET (8a), et
un signal numérique de mise en fonction est présent au niveau de la deuxième entrée du premier élément ET (8a), et
un signal numérique de mise en fonction est présent au niveau de la troisième entrée du premier élément ET (8a).

8. Le dispositif de commutation selon l'une quelconque des revendications 1 à 7,
dans lequel la première unité de calcul (1a) comprend en outre une troisième entrée et la seconde unité de calcul (1b) comprend en outre une troisième entrée;
dans lequel le dispositif de commutation comprend en outre:
un second élément ET (8b), un troisième indicateur de position (6c) et un troisième commutateur (5c), dans lequel le second élément ET (8b) présente une sortie et est relié en communication au troisième commutateur (5c) par l'intermédiaire de la sortie du second élément ET (8b);
dans lequel le second élément ET (8b) présente des première et deuxième entrées et la première unité de calcul (1a) est reliée en communication au second élément ET (8b) par l'intermédiaire de la première entrée du second élément ET (8b) et la seconde unité de calcul (1b) est reliée en communication au second élément ET (8b) par l'intermédiaire de la deuxième entrée du second élément ET (8b);
dans lequel chacune des unités de calcul (1a, 1b) est conçue pour envoyer un signal numérique de mise en fonction au second élément ET (8b), et le second élément ET (8b) est conçu pour actionner le troisième commutateur (5c) uniquement à réception des deux signaux numériques de mise en fonction;
dans lequel le troisième indicateur de position (6c) est associé au troisième commutateur (5c) et est relié en communication à la troisième entrée de la première unité de calcul (1a) et à la troisième entrée de la seconde unité de calcul (1b);
dans lequel les unités de calcul (1a, 1b) sont reliées en communication les unes aux autres et chacune des unités de calcul (1a, 1b) est conçue pour:
lire un troisième signal de position provenant du troisième indicateur de position (6c),
transmettre le troisième signal de position lu de l'autre unité de calcul (1b, 1a) respective de sorte que l'autre unité de calcul (1b, 1a) respective reçoive le troisième signal de position transmis,
comparer le troisième signal de position lu avec le troisième signal de position reçu, et
émettre un message d'erreur si le troisième signal de position lu et le troisième signal de position reçu ne correspondent pas.

9. Le dispositif de commutation selon les revendications 6 et 8,
dans lequel le second élément ET (8b) comprend une troisième entrée;
dans lequel la sortie de l'alimentation en courant et/ou en tension réglable (9) est reliée de manière galvanique à la troisième entrée du second élément ET (8b);
dans lequel le second élément ET (8b) est conçu pour n'actionner ensuite le troisième commutateur (5c) que si:
un signal numérique de mise en fonction est présent au niveau de la première entrée du second élément ET (8b), et un signal numérique de mise en fonction est présent au niveau de la deuxième entrée du second élément ET (8b), et
un signal numérique de mise en fonction est présent au niveau de la troisième entrée du second élément ET (8b).

10. Le dispositif de commutation selon l'une quelconque des revendications 1 à 9,
dans lequel le dispositif de commutation comprend en outre :
un quatrième indicateur de position (6d) et un quatrième commutateur (5d);
dans lequel le quatrième commutateur (5d) est couplé de manière mécanique au premier commutateur (5a) de sorte que le quatrième commutateur (5d) n'est ensuite dans une position ouverte que si le premier commutateur (5a) est dans une position ouverte, et le quatrième commutateur (5d) n'est ensuite dans une position fermée que si le premier commutateur (5a) est dans une position fermée;
dans lequel le quatrième indicateur de position (6d) est associé au quatrième commutateur (5d) et est relié en communication à la troisième entrée de la première unité de calcul (1a) et à la troisième entrée de la seconde unité de calcul (1b);
dans lequel les unités de calcul (1a, 1b) sont reliées en communication les unes aux autres et chacune des unités de calcul (1a, 1b) est conçue pour :
lire un quatrième signal de position provenant du quatrième indicateur de position (6d),
transmettre le quatrième signal de position lu de l'autre unité de calcul (1b, 1a) respective de sorte que l'autre unité de calcul (1b, 1a) respective reçoive le quatrième signal de position transmis,
comparer le quatrième signal de position lu avec le quatrième signal de position reçu, et
émettre un message d'erreur si le quatrième signal de position lu et le quatrième signal de position reçu ne correspondent pas.

11. Le dispositif de commutation selon la revendication 10,
dans lequel chacune des unités de calcul (1a, 1b) est conçue pour:
comparer le premier signal de position lu avec le quatrième signal de position reçu, et
émettre un message d'erreur si le premier signal de position lu et le quatrième signal de position reçu ne correspondent pas.

12. Le dispositif de commutation selon la revendication 10,
dans lequel chacune des unités de calcul (1a, 1b) est conçue pour:
comparer le quatrième signal de position lu avec le premier signal de position reçu, et
émettre un message d'erreur si le quatrième signal de position lu et le premier signal de position reçu ne correspondent pas.

13. Le dispositif de commutation selon l'une quelconque des revendications 10 à 12,
dans lequel le dispositif de commutation comprend en outre une vanne (4);
dans lequel le premier commutateur (5a), la vanne (4) et le quatrième commutateur (5d) sont commutés en série; et
dans lequel la vanne (4) est agencée entre le premier commutateur (5a) et le quatrième commutateur (5d).

14. Le dispositif de commutation selon l'une quelconque des revendications 10 à 13,
dans lequel le dispositif de commutation comprend au moins une résistance d'indication (12);
dans lequel le quatrième indicateur de position (6d) est relié de manière galvanique à la au moins une résistance de rétroaction (12).

15. Le dispositif de commutation selon l'une quelconque des revendications 10 à 14,
dans lequel le dispositif de commutation comprend au moins une résistance parallèle (13) et au moins une diode (19);
dans lequel la au moins une résistance parallèle (13) est commutée en parallèle avec le quatrième commutateur (5d, 5e);
dans lequel la au moins une résistance parallèle (13) comprend un premier contact et le quatrième commutateur (5d, 5e) comprend un premier contact;
dans lequel le premier contact de la au moins une résistance parallèle (13) est relié de manière galvanique au premier contact du quatrième commutateur (5d, 5e); et
dans lequel le premier contact est relié à la troisième entrée de la première unité de calcul (1a) par l'intermédiaire de la au moins une diode (19).
